# EUROPEAN PATENT SPECIFICATION

(11) **EP 4 438 874 B1**
(45) Date of publication and mention of the grant of the patent: **07.10.2026**
(21) Application number: 24165794.9
(22) Date of filing: 25.03.2024
(51) Int. Cl.: F02C 7/14, F28D 1/02, F28D 1/047, F28F 1/26, F28F 3/04, F28F 9/26, F28D 21/00

(54) **METHOD FOR MANUFACTURING HEAT EXCHANGER AND HEAT EXCHANGER**
VERFAHREN ZUR HERSTELLUNG EINES WÄRMETAUSCHERS UND WÄRMETAUSCHER
PROCÉDÉ DE FABRICATION D'ÉCHANGEUR DE CHALEUR ET ÉCHANGEUR DE CHALEUR

(30) Priority: 28.03.2023 JP 2023052134
(43) Date of publication of application: 02.10.2024
(73) Proprietor: Sumitomo Precision Products Co., Ltd., Amagasaki-shi, Hyogo 660-0891 (JP)
(72) Inventor: KAI, Yoichi, Amagasaki-shi, Hyogo 660-0891 (JP)
(74) Representative: Viering, Jentschura & Partner mbB Patent- und Rechtsanwälte

(56) References cited:
- EP-A1- 3 537 085
- EP-A1- 3 822 571
- CA-A1- 2 822 713

## Description

### BACKGROUND OF THE INVENTION

### Field of the Invention

The present invention relates to a method for manufacturing a heat exchanger and a heat exchanger, and more particularly, it relates to a method for manufacturing a heat exchanger including a flow path therein and fins on an outside surface thereof, and a heat exchanger.

### Description of the Background Art

A method for manufacturing a heat exchanger including a flow path therein and fins on an outside surface thereof is known.

Japanese Patent No. 5442916 discloses a method for manufacturing a heat exchanger to be placed along a curved surface formed within an aircraft engine.

In the method, it needs brazing and bending after brazing on an assembly having substantially the same size as that of a finished piece. Therefore, in order to manufacture a heat exchanger, large-scale equipment that can handle a workpiece (processing object) having substantially the same size as that of a finished piece is required. Thus, there is a need for a manufacturing method and a heat exchanger structure that can prevent an increase in the size of manufacturing equipment even for a large-size heat exchanger.

EP 3 537 085 A1 discloses a method for manufacturing a heat exchanger and a heat exchanger, wherein the heat exchanger comprises a main body configured by connecting a plurality of units to each other; wherein each of the plurality of units integrally includes a connector with another unit and a flow path portion between an inlet and outlets; and wherein the heat exchanger main body includes, by interconnecting the plurality of units, an internal flow path including a plurality of the flow path portions, a fluid inlet and a fluid outlet both connected to the internal flow path, and a plurality of fin portions.

### SUMMARY OF THE INVENTION

One or more aspects of the present invention are directed to providing a method for manufacturing a heat exchanger capable of preventing an increase in the size of manufacturing equipment even for a large-size heat exchanger and such a heat exchanger.

A method for manufacturing a heat exchanger according to a first aspect of the present invention is disclosed in claim 1.

A heat exchanger according to a second aspect of the present invention is disclosed in claim 11.

### BRIEF DESCRIPTION OF THE DRAWINGS

FIG. 1 is a perspective view schematically showing a heat exchanger according to one or more embodiments.
FIG. 2 is a schematic longitudinal sectional view of the heat exchanger according to one or more embodiments.
FIG. 3 is a schematic view for illustrating the structure of an internal flow path of the heat exchanger.
FIG. 4 is a perspective diagram of a first unit according to one or more embodiments.
FIG. 5 is a sectional diagram showing the structure of a first layer of the first unit according to one or more embodiments.
FIG. 6 is a sectional diagram showing the structure of a second layer of the first unit according to one or more embodiments.
FIG. 7 is a sectional diagram showing the structure of ports of the first unit according to one or more embodiments.
FIG. 8 is a perspective diagram of a second unit according to one or more embodiments.
FIG. 9 is a sectional diagram showing the structure of a first layer of the second unit according to one or more embodiments.
FIG. 10 is a sectional diagram showing the structure of a second layer of the second unit according to one or more embodiments.
FIG. 11 is a sectional diagram showing the structure of a bypass of the second unit according to one or more embodiments.
FIG. 12 is a perspective diagram of a third unit according to one or more embodiments.
FIG. 13 is a sectional diagram showing the structure of a first layer of the third unit according to one or more embodiments.
FIG. 14 is a sectional diagram showing the structure of a second layer of the third unit according to one or more embodiments.
FIG. 15 is a perspective diagram of a fourth unit according to one or more embodiments.
FIG. 16 is a sectional diagram showing the structure of a first layer of the fourth unit according to one or more embodiments.
FIG. 17 is a sectional diagram showing the structure of a second layer of the fourth unit according to one or more embodiments.
FIG. 18 is a sectional diagram showing the structure of a return portion of the fourth unit according to one or more embodiments.
FIG. 19 is a sectional diagram showing a connection protrusion and a connection recess according to one or more embodiments.
FIG. 20 is a sectional diagram showing a state in which the connection protrusion and the connection recess according to one or more embodiments are connected to each other.
FIG. 21 is a flowchart for illustrating a method for manufacturing the heat exchanger according to one or more embodiments.
FIG. 22 is a schematic view showing a first modification of the heat exchanger.
FIG. 23 is a schematic view showing a second modification of the heat exchanger.
FIG. 24 is a schematic view showing a third modification of the heat exchanger.
FIG. 25 is a schematic view showing a fourth modification of the heat exchanger.
FIG. 26 is a schematic view showing a fifth modification of the heat exchanger.
FIG. 27 is a sectional explanatory diagram showing a modification of connectors of a unit.
FIG. 28 is a sectional explanatory diagram showing a state in which the connectors of the unit in FIG. 27 are connected.
FIG. 29 is a sectional explanatory diagram showing a modification in which two units are connected to each other by a connecting member.

### DESCRIPTION OF THE PREFERRED EMBODIMENTS

One or more embodiments of the present invention are described with reference to the drawings.

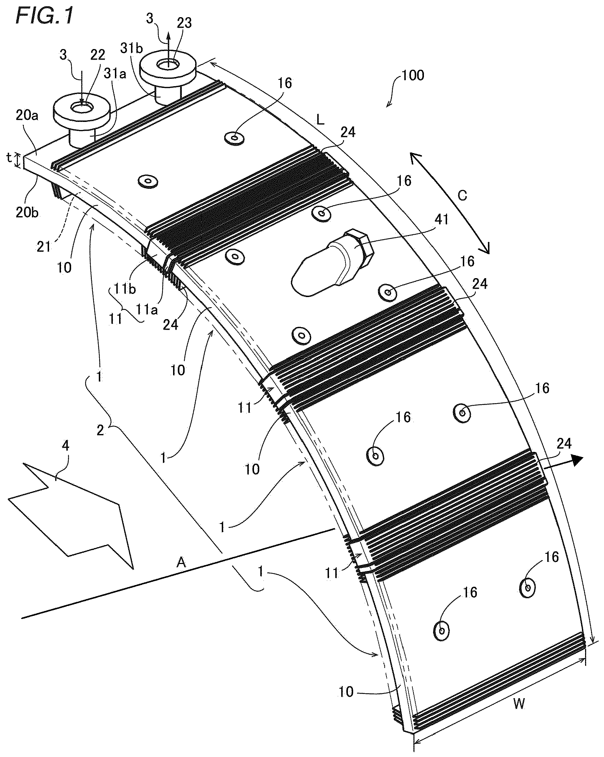

Referring to FIGS. 1 to 20, the configuration of a heat exchanger 100 according to one embodiment is now described. The heat exchanger 100 according to the embodiment exchanges heat between an external fluid 4 flowing outside of the heat exchanger 100 and a fluid 3 flowing inside of the heat exchanger 100.

Specifically, the heat exchanger 100 according to the embodiment shown in FIG. 1 is a heat exchanger for an aircraft engine, and is installed in the aircraft engine. The heat exchanger 100 is provided as an air-cooled heat exchanger (cooler) that cools the fluid 3 flowing inside by exchanging heat with an airflow (external fluid 4) passing through the aircraft engine. The aircraft engine is a type of engine, such as a gas turbine engine, that generates a propulsive force using air taken from the outside into a cylindrical casing, and a high-speed airflow is generated within the casing. The fluid 3 is oil used in aircraft, such as lubricating oil for the aircraft engine or lubricating oil for a generator driven by the aircraft engine.

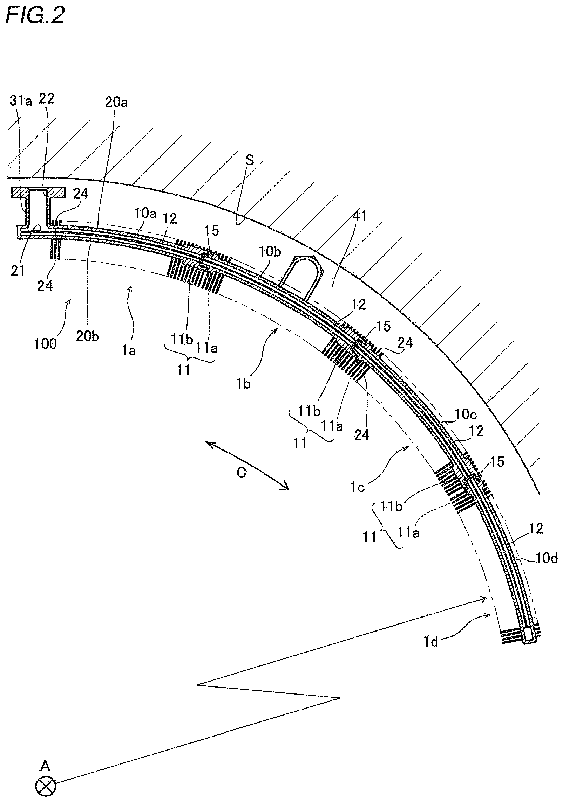

Thus, the heat exchanger 100 is configured as a surface cooler for the aircraft engine. The surface cooler is a type of heat exchanger that cools the fluid 3 flowing inside of the heat exchanger 100 by an airflow flowing along external fins 24 provided on the outer surface of the heat exchanger 100 having a hollow plate shape. As shown in FIG. 2, the heat exchanger 100 has a curved shape that is curved in the longitudinal direction along a curved surface S formed within the aircraft engine. The curved surface S within the aircraft engine is the inner peripheral surface of a fan casing of the aircraft engine, for example.

The heat exchanger 100 is provided with a length of about 1/n circumference (n is a real number of 1 or more) in the circumferential direction (direction C) along the substantially cylindrical curved surface S. The length of the heat exchanger 100 is about 1/8 of the entire circumference of the curved surface S, for example, but the heat exchanger 100 may have an annular shape that extends over substantially the entire circumference of the curved surface S. The external fluid 4 (airflow) flows along a direction A (see FIG. 1), which is a substantially axial direction (the direction of the rotation axis of a turbine) within the aircraft engine. The curved surface S within the aircraft engine is not necessarily a perfectly cylindrical curved surface, and thus the radius of curvature of the heat exchanger 100 in that case differs depending on the position in the axial direction (direction A).

### Overall Configuration of Heat Exchanger

The overall configuration of the heat exchanger 100 is described. As shown in FIG. 1, the heat exchanger 100 includes a heat exchanger main body 2 configured by connecting a plurality of units 1 to each other. That is, the heat exchanger main body 2 has a divided structure including the plurality of units 1. The heat exchanger 100 may further include accessories attached to the heat exchanger main body 2 in addition to the heat exchanger main body 2.

As described above, the heat exchanger main body 2 has a curved shape along the curved surface S (see FIG. 2). In the embodiment, the heat exchanger main body 2 has a curved shape along the longitudinal direction. The heat exchanger main body 2 is formed into a curved plate shape as a whole. The heat exchanger main body 2 has a width W, a length L in the circumferential direction (direction C), and a thickness t. The width W is smaller than the length L, and the thickness t is smaller than the length L and the width W.

The heat exchanger main body 2 includes, by interconnecting the plurality of units 1, an internal flow path 21 (see FIG. 2) including a plurality of flow path portions 12 (see FIG. 2), a fluid inlet 22 and a fluid outlet 23 connected to the internal flow path 21, and a plurality of external fins 24 formed on the outer surface. The flow path portions 12 are flow paths formed in the plurality of units 1, and are portions of the internal flow path 21 of the heat exchanger main body 2.

As shown in FIG. 2, the internal flow path 21 is a passage through which the fluid 3 flows. Furthermore, the internal flow path 21 is a space formed inside the heat exchanger main body 2. One end of the internal flow path 21 communicates with the fluid inlet 22 (see FIG. 1), and another end of the internal flow path 21 communicates with the fluid outlet 23 (see FIG. 1).

As shown in FIG. 1, the fluid inlet 22 and the fluid outlet 23 are fluid passages that open to the outside of the heat exchanger main body 2. Each of the fluid inlet 22 and the fluid outlet 23 is connected to a fluid circuit outside the heat exchanger main body 2. In the embodiment, the fluid inlet 22 and the fluid outlet 23 are arranged at a first end of the heat exchanger main body 2 in the longitudinal direction and are aligned in the width direction of the heat exchanger main body 2.

The plurality of external fins 24 are provided on a first surface 20a and a second surface 20b of the heat exchanger main body 2 in the thickness direction. The plurality of external fins 24 are provided rising from the first surface 20a or the second surface 20b. The plurality of external fins 24 are arranged along the longitudinal direction of the heat exchanger main body 2. The external fins 24 are provided substantially parallel to each other at substantially equal intervals (substantially equal pitches). The plurality of external fins 24 extend substantially along the width direction (the axial direction A of the aircraft engine) of the heat exchanger main body 2. In each figure, only portions of both ends of the plurality of external fins 24 are illustrated, and the remaining portions are omitted by two-dot chain lines.

### Unit

The plurality of units 1 are prepared separately from each other. In FIG. 1, the plurality of units 1 are aligned in the longitudinal direction (direction C) of the heat exchanger main body 2, and are interconnected to adjacent units 1. In the embodiment, the connection direction of the plurality of units 1 (the direction in which the individual units 1 are connected to each other) is synonymous with the longitudinal direction (direction C) of the heat exchanger main body 2.

In the embodiment, the heat exchanger main body 2 includes four units 1. When these four units 1 are distinguished, the respective units 1 are referred to as a unit 1a, a unit 1b, a unit 1c, and a unit 1d, as shown in FIG. 2.

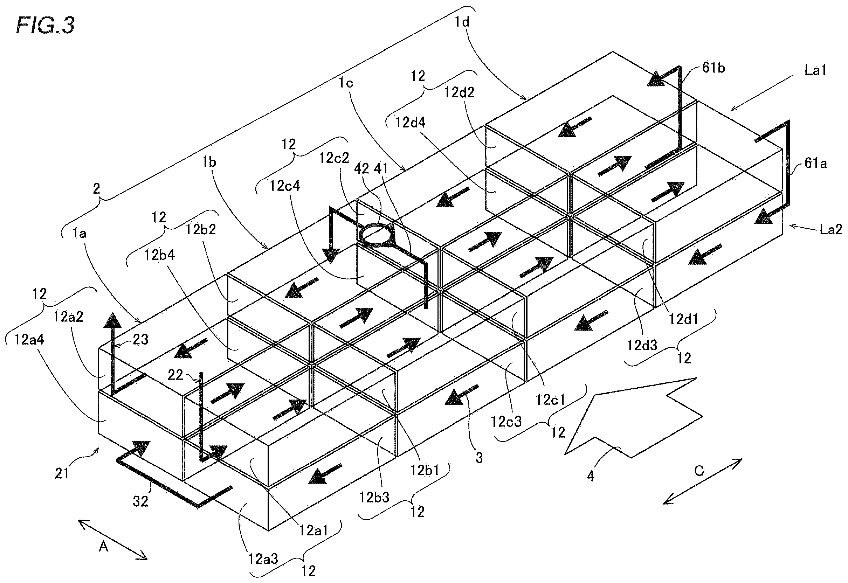

Each of the plurality of units 1 (1a to 1d) integrally includes one or more connectors 11 with other units 1 and one or more flow path portions 12. Each of the plurality of units 1 includes a unit body 10 (10a, 10b, 10c, or 10d) with which the connector(s) 11 and the flow path portion(s) 12 (see FIG. 3) are formed integrally.

The unit body 10 (10a, 10b, 10c, or 10d) includes the connector(s) 11, the flow path portion(s) 12, and two or more external fins 24, and has a curved shape. The unit body 10 (10a, 10b, 10c, or 10d) is an integrated member formed by an additive manufacturing method. That is, the connector(s) 11, the flow path portion(s) 12, and the external fins 24 are integrally formed by the additive manufacturing method and made of the same material. The material of the unit body 10 (10a, 10b, 10c, or 10d) is metal such as an aluminum material (aluminum or an aluminum alloy).

Sealing members 15 are attached to the connectors 11. The sealing members 15 reduce or prevent leakage of the fluid 3 from gaps between the connectors 11 between the interconnected units 1.

Each of the plurality of units 1 is connected to another unit 1 at the connector 11 such that the flow path portion(s) 12 inside the unit communicates with the flow path portion(s) 12 of another unit 1. The flow path portions 12 of the plurality of units 1 communicate with each other such that the internal flow path 21 of the heat exchanger main body 2 is configured.

In the embodiment, each of the plurality of units 1 includes a plurality of flow path portions 12. Specifically, as shown in FIG. 3, each of the units 1a to 1d includes four flow path portions 12 (12a1 to 12a4, 12b1 to 12b4, 12c1 to 12c4, or 12d1 to 12d4). That is, each of the units 1a to 1d is provided with the flow path portions 12 extending in the longitudinal direction and divided into two portions in the width direction and two layers in the thickness direction. Hereinafter, the layer on the first surface 20a (see FIG. 2) side is referred to as a first layer La1, and the layer on the second surface 20b (see FIG. 2) side is referred to as a second layer La2.

The plurality of units 1 may have mutually different structural portions in addition to the common structures described above. The plurality of units 1 can be classified by function or structure for achieving the function. In the embodiment, the plurality of (four) units 1a to 1d have different functions (structures) from each other.

The unit 1a includes at least one port that functions as the fluid inlet 22 or the fluid outlet 23. In the embodiment, the unit 1a includes two ports 31a and 31b (see FIG. 1), and one port 31a functions as the fluid inlet 22, and the other port 31b functions as the fluid outlet 23. As shown in FIG. 3, the unit 1a also includes a return portion 32 that turns back the flow path portion 12 in the opposite direction. The return portion 32 of the unit 1a turns back the flow path portion 12 in the opposite direction in the same layer (plane) by connecting two flow path portions 12 aligned in the width direction in the same layer (second layer La2). Thus, the unit 1a has two functions: a function as an inlet/outlet for the fluid 3, and a function to return the fluid 3 in the same layer (in-plane direction).

The unit 1b includes a bypass 41 that connects one of the plurality of flow path sections 12 to another one via a valve 42. That is, two flow path portions 12b1 and 12b2 of the unit 1b that are adjacent to each other in the width direction are connected to the bypass 41. The bypass 41 is constantly closed by the valve 42, but when the valve 42 opens due to pressure fluctuations in the internal flow path 21, the fluid 3 passes through the bypass 41. The unit 1b has a bypass function for the internal flow path 21.

The unit 1c is a standard unit dedicated for heat exchange and including four flow path portions 12 (12c1 to 12c4) divided by walls and the external fins 24 (see FIG. 2). The external fins 24 are also provided on the other units 1a, 1b, and 1d, and heat exchange between the fluid 3 and the external fluid 4 is a function that all the units 1a to 1d have in common. The number of connected units 1c is increased or decreased such that the overall size and heat exchange performance of the heat exchanger 100 can be freely adjusted.

The unit 1d includes return portions 61a and 61b that turn back the flow path portions 12 in the opposite direction. Each of the return portions 61a and 61b of the unit 1d connects two flow path portions 12 arranged at the same position in the width direction and aligned in the thickness direction. That is, the return portions 61a and 61b of the unit 1d turn back the flow path portions 12 in the opposite direction between the first layer La1 and the second layer La2. Thus, the unit 1d has a function of returning the fluid 3 into different layers (in the thickness direction).

The plurality of units 1 can also be classified according to the number of connectors 11. That is, the plurality of units 1 include single-connection units that include the connector 11 on only one end surface, and multi-connection units that include the connectors 11 on two or more end surfaces, respectively.

As shown in FIG. 2, the single-connection units are arranged at ends of the heat exchanger main body 2 in the connection direction (direction C). One side of each of the single-connection units in the connection direction is closed by a wall. In the embodiment, the unit 1a and the unit 1d are single-connection units.

The multi-connection units are arranged in the center of the heat exchanger main body 2 in the connection direction (direction C). That is, the multi-connection units are provided between the single-connection units at both ends of the heat exchanger main body 2. In the embodiment, the unit 1b and the unit 1c are multi-connection units. These multi-connection units are provided with the connectors 11 on a first end surface and a second end surface in the connection direction (direction C), respectively.

### Detailed Structure of Each Unit

The detailed structures of the respective units 1a to 1d are now described.

### Unit 1a

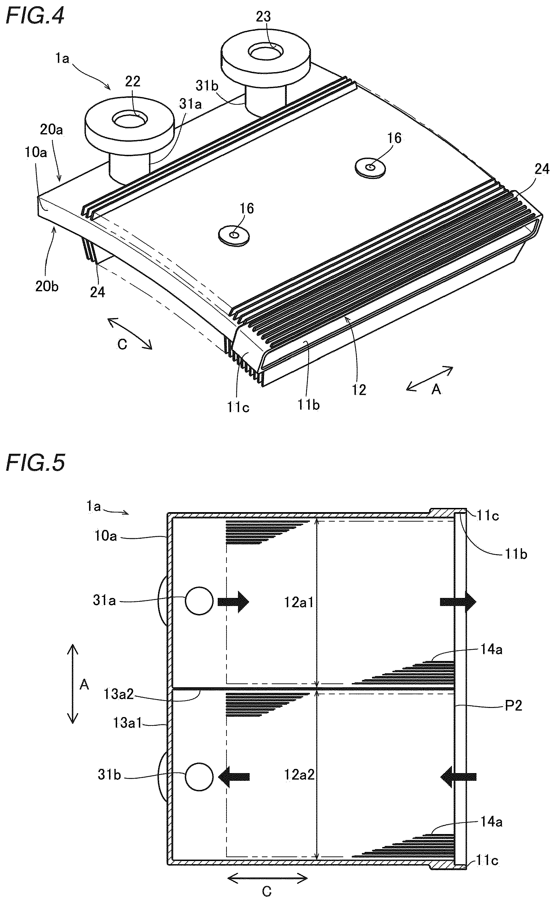

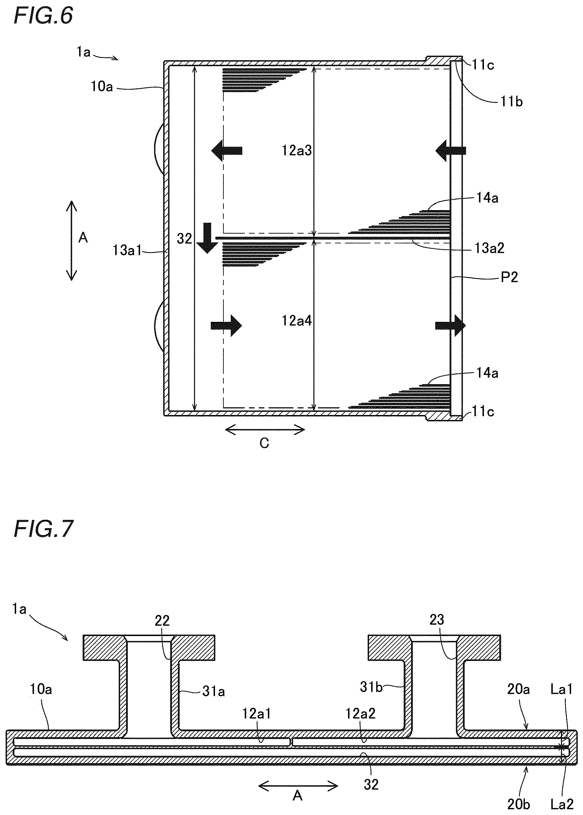

As shown in FIG. 2, the unit 1a is provided at the first end of the heat exchanger main body 2 in the direction C, and a second end of the unit 1a is connected to the unit 1b. As shown in FIG. 4, the unit 1a includes a unit body 10a including one connector (11b), four flow path portions 12a1 to 12a4 in two layers × two rows (see FIGS. 5 and 6), a plurality of external fins 24, and two ports 31a and 31b. The first end side of the unit body 10a in the direction C is closed by a wall 13a1 (see FIG. 5), and the two ports 31a and 31b are provided in the vicinity of the first end.

Both the ports 31a and 31b are tubular portions rising from the first surface 20a side of the unit body 10a. Furthermore, fixing portions 16 are provided on the first surface 20a side of the unit body 10a to fix the unit 1a to a mounting structure within the aircraft engine. The fixing portions 16 are screw holes for fastening and fixing, for example. The plurality of external fins 24 are formed while avoiding locations at which the fixing portions 16 are formed, and the fixing portions 16 are exposed on the outer surface of the unit 1a.

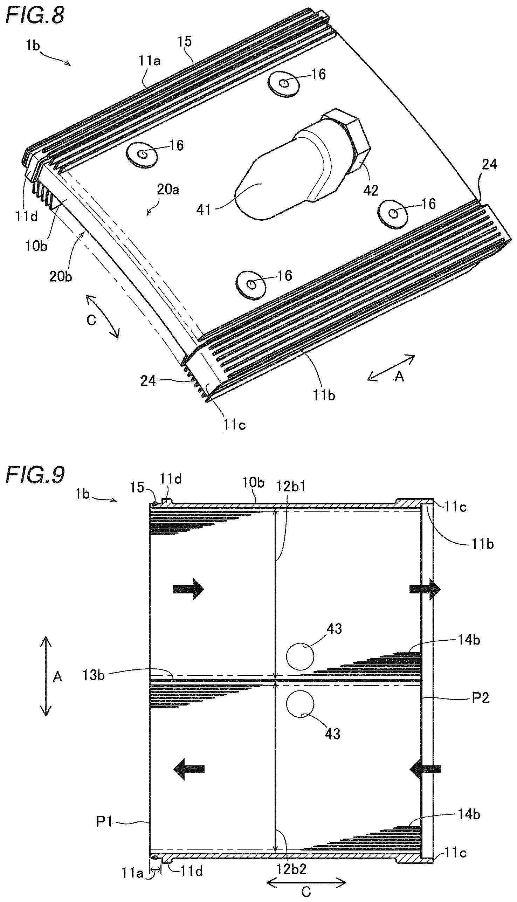

The connector 11 (see FIG. 2) of the unit 1a includes a connection recess 11b. The connection recess 11b has an annular peripheral wall 11c, and a connection protrusion 11a (see FIG. 8) can be inserted into and removed from the peripheral wall 11c.

As shown in FIG. 5, in the first layer La1 of the unit 1a, the two flow path portions 12a1 and 12a2 are formed side by side in the width direction (direction A). The two flow path portions 12a1 and 12a2 are separated from each other by a wall 13a2 so as not to communicate with each other. The two flow path portions 12a1 and 12a2 extend in the direction C, and open to the inner peripheral side of the connection recess 11b at the second end of the unit 1a.

As shown in FIG. 7, the port 31a penetrates a wall of the unit body 10a on the first surface 20a side in the thickness direction and communicates with the flow path portion 12a1. The port 31b penetrates the wall of the unit body 10a on the first surface 20a side in the thickness direction and communicates with the flow path portion 12a2.

As shown in FIG. 6, in the second layer La2 of the unit 1a, the two flow path portions 12a3 and 12a4 are formed side by side in the width direction (direction A) with the wall 13a2 interposed therebetween. The flow path portions 12a3 and 12a4 extend in the direction C inside the unit body 10a and communicate with each other via the return portion 32. The return portion 32 extends in the direction A to connect first ends of the flow path portions 12a3 and 12a4 to each other. The unit 1a is a single-connection unit, and thus a first end of the unit 1a is closed by the wall 13a1, and the connector 11 is not provided at the first end. As shown in FIGS. 5 and 6, each of the flow path portions 12a1 to 12a4 is provided with a plurality of internal fins 14a. The plurality of internal fins 14a are distributed throughout the entire width and length of each of the flow path portions 12a1 to 12a4. In FIGS. 5 and 6, for convenience, portions of the internal fins 14a are omitted and shown by two-dot chain lines.

### Unit 1b

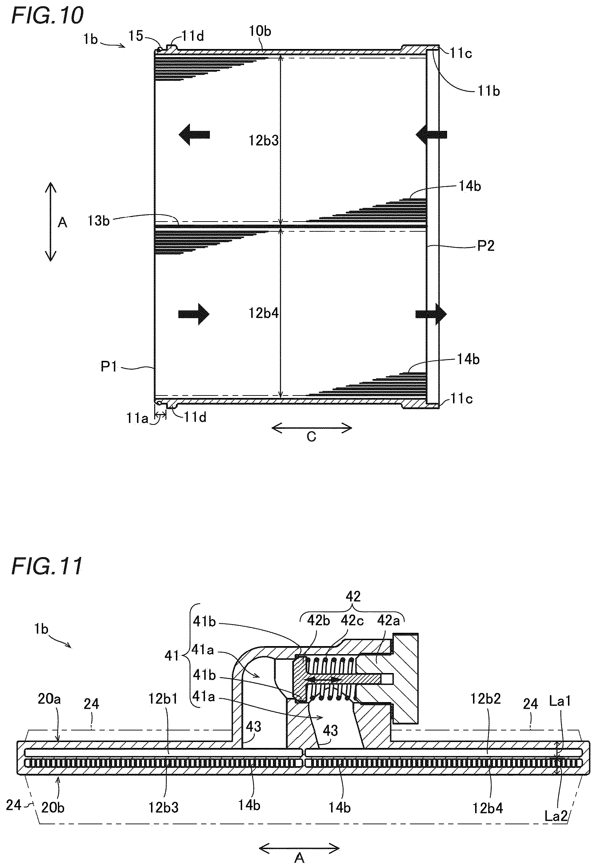

As shown in FIG. 2, the unit 1b is arranged between the unit 1a and the unit 1c, and is connected to the unit 1a on the first end side and connected to the unit 1c on the second end side. As shown in FIG. 8, the unit 1b includes a unit body 10b including two connectors 11 (11a and 11b), four flow path portions 12b1 to 12b4 in two layers × two rows (see FIGS. 9 and 10), a plurality of external fins 24, and one bypass 41. Furthermore, fixing portions 16 are provided on the first surface 20a side of the unit body 10b, similarly to the unit 1a. The connector 11 (see FIG. 2) of the unit 1b on the first end side in the direction C is a connection protrusion 11a formed into a convex shape, and fits into the connection recess 11b (see FIG. 4) of the unit 1a. The connector 11 of the unit 1b on the second end side in the direction C is a connection recess 11b. The bypass 41 is provided in the vicinity of the center in the direction C on the first surface 20a side of the unit body 10b. Each of the flow path portions 12b1 to 12b4 is provided with a plurality of internal fins 14b (see FIGS. 9 and 10). In FIGS. 9 and 10, for convenience, portions of the internal fins 14b are omitted and shown by two-dot chain lines.

As shown in FIG. 9, in the first layer La1 of the unit 1b, the two flow path portions 12b1 and 12b2 are formed side by side in the width direction (direction A). The two flow path portions 12b1 and 12b2 are separated from each other by a wall 13b. Both the two flow path portions 12b1 and 12b2 extend in the direction C, open to an end surface of the connection protrusion 11a at a first end of the unit 1b, and open to the inner peripheral side of a peripheral wall 11c of the connection recess 11b at a second end of the unit 1b.

In FIG. 9, through-holes 43 formed in wall surfaces of the flow path portions 12b1 and 12b2 on the first surface 20a side are shown. The flow path portions 12b1 and 12b2 communicate with the bypass 41 at the respective through-holes 43.

As shown in FIG. 10, in the second layer La2 of the unit 1b, the two flow path portions 12b3 and 12b4 are formed side by side in the width direction. The flow path portions 12b3 and 12b4 are divided by the wall 13b and do not communicate with each other. Both the two flow path portions 12b3 and 12b4 extend in the direction C, open to the end surface of the connection protrusion 11a at the first end of the unit 1b, and open to the inner peripheral side of the peripheral wall 11c of the connection recess 11b at the second end of the unit 1b. The plurality of internal fins 14b are distributed throughout the entire width and length of each of the flow path portions 12b3 and 12b4.

As shown in FIG. 11, the bypass 41 includes a passage 41a in which the valve 42 is assembled. The passage 41a has one end connected to the through-hole 43 on the flow path portion 12b1 side, and another end connected to the through-hole 43 on the flow path portion 12b2 side. An insertion port for the valve 42 is formed in the bypass 41, and the insertion port is closed by the valve 42. The valve 42 includes a valve body 42a, a valve element 42b attached to the valve body 42a so as to be movable forward and backward, and an urging member 42c to urge the valve element 42b toward a valve seat 41b. In the embodiment, valve 42 is a poppet valve.

The valve element 42b contacts the annular valve seat 41b over its entire circumference such that the passage 41a connecting the flow path portion 12b1 to the flow path portion 12b2 is openably closed. That is, when the valve element 42b is in contact with the valve seat 41b, the passage 41a is closed and the bypass 41 is disconnected. This state is the closed state of the valve 42. When the valve element 42b is separated from the valve seat 41b, the passage 41a is opened, and the flow path portion 12b1 and the flow path portion 12b2 communicate with each other via the bypass 41. This state is the open state of the valve 42. The valve element 42b is urged to enter the closed state by the urging force of the urging member 42c. The urging member 42c is a compression coil spring.

The valve element 42b receives a pressure from the flow path portion 12b1 on one side and receives a pressure from the flow path portion 12b2 on the other side while being in contact with the valve seat 41b. The valve 42 switches from the closed state to the open state when a pressure difference between the pressure on the flow path portion 12b1 side and the pressure on the flow path portion 12b2 side exceeds the urging force of the urging member 42c. When the fluid 3 (oil) is at a low temperature and has low fluidity, such as when an aircraft with the heat exchanger 100 installed thereon starts in a cryogenic environment, the pressure on the flow path portion 12b1 side increases, the valve 42 is in the open state, and the fluid 3 flows from the flow path portion 12b1 to the flow path portion 12b2. Therefore, the fluid 3 flows from the fluid inlet 22 to the fluid outlet 23 via the bypass 41 (that is, a portion of the internal flow path 21 is shortcut). Thus, the bypass 41 is used to reduce or prevent heat release from the fluid 3 in the heat exchanger 100 when the fluid temperature is excessively low and to quickly increase the temperature of the fluid 3.

### Unit 1c

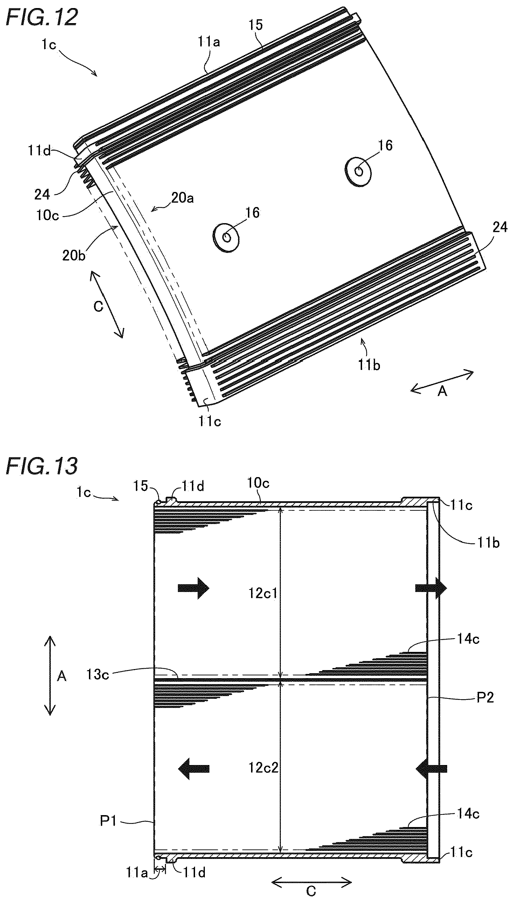

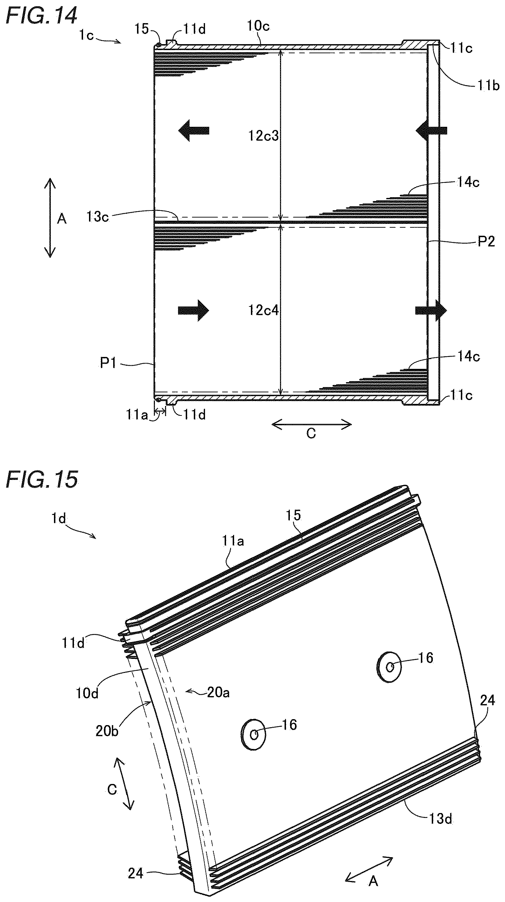

As shown in FIG. 2, the unit 1c is arranged between the unit 1b and the unit 1d, and is connected to the unit 1b on the first end side and connected to the unit 1d on the second end side. As shown in FIG. 12, the unit 1c includes a unit body 10c including two connectors 11 (11a and 11b), four flow path portions 12c1 to 12c4 in two layers × two rows (see FIGS. 13 and 14), and a plurality of external fins 24. Furthermore, fixing portions 16 are provided on the first surface 20a side of the unit body 10c. The connector 11 on the first end side in the direction C is a connection protrusion 11a formed into a convex shape, and fits into the connector 11 (connection recess 11b; see FIG. 8) of the unit 1b. The connector 11 on the second end side in the direction C is a connection recess 11b, into which the connector 11 (connection protrusion 11a; see FIG. 15) of the unit 1d is fitted. Each of the flow path portions 12c1 to 12c4 is provided with a plurality of internal fins 14c (see FIGS. 13 and 14). In FIGS. 13 and 14, for convenience, portions of the internal fins 14c are omitted and shown by two-dot chain lines.

As shown in FIG. 13, in the first layer La1 of the unit 1c, the two flow path portions 12c1 and 12c2 are formed side by side in the width direction (direction A). The flow path portions 12c1 and 12c2 are separated from each other by a wall 13c so as not to communicate with each other. Both the two flow path portions 12c1 and 12c2 extend in the direction C, open to an end surface of the connection protrusion 11a at a first end of the unit 1c, and open to the inner peripheral side of a peripheral wall 11c of the connection recess 11b at a second end of the unit 1c.

As shown in FIG. 14, in the second layer La2 of the unit 1c, the two flow path portions 12c3 and 12c4 are formed side by side in the width direction (direction A). The flow path portions 12c3 and 12c4 are separated from each other by the wall 13c so as not to communicate with each other. Both the two flow path portions 12c3 and 12c4 extend in the direction C, open to the end surface of the connection protrusion 11a at the first end of the unit 1c, and open to the inner peripheral side of the peripheral wall 11c of the connection recess 11b at the second end of the unit 1c.

Thus, the first layer La1 and the second layer La2 of the unit 1c have substantially the same structure. The flow path portions 12c1 and 12c2 and the flow path portions 12c3 and 12c4 are linear flow paths passing through the unit body 10c in the direction C in a plan view.

### Unit 1d

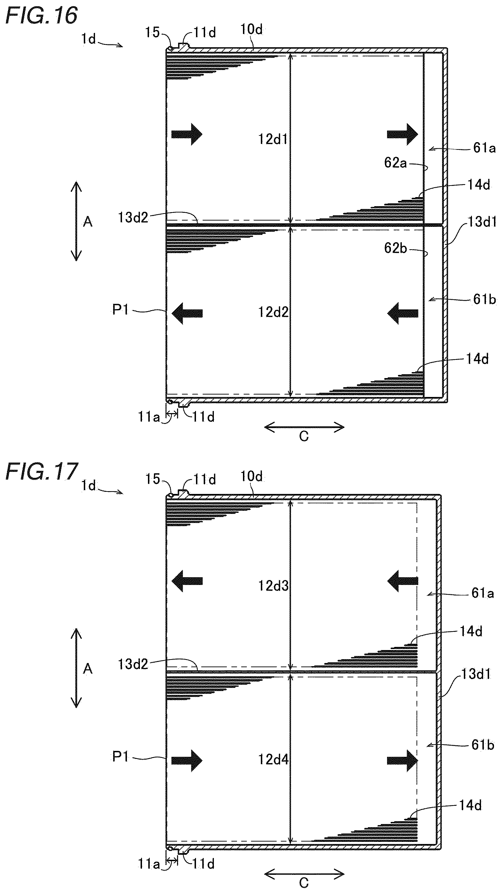

As shown in FIG. 2, the unit 1d is provided at a second end of the heat exchanger main body 2 in the direction C, and is connected to the unit 1c. As shown in FIG. 15, the unit 1d includes a unit body 10d including one connector (11a), four flow path portions 12d1 to 12d4 in two layers × two rows (see FIGS. 16 and 17), and a plurality of external fins 24. Furthermore, fixing portions 16 are provided on the first surface 20a side of the unit body 10d. The connector 11 on the first end side in the direction C is a connection protrusion 11a formed into a convex shape, and fits into the connection recess 11b (see FIG. 12) of the unit 1c. The second end side of the unit body 10d in the direction C is closed by a wall 13d1. Each of the flow path portions 12d1 to 12d4 is provided with a plurality of internal fins 14d (see FIGS. 16 and 17). In FIGS. 16 and 17, for convenience, portions of the internal fins 14d are omitted and shown by two-dot chain lines.

As shown in FIG. 16, in the first layer La1 of the unit 1d, the two flow path portions 12d1 and 12d2 are formed side by side in the width direction (direction A). The flow path portions 12d1 and 12d2 are separated from each other by a wall 13d2 so as not to communicate with each other. Both the two flow path portions 12d1 and 12d2 extend in the direction C, and open to an end surface of the connection protrusion 11a at a first end of the unit 1d. The flow path portions 12d1 and 12d2 are connected to the return portions 61a and 61b, respectively, at a second end of the unit 1d.

As shown in FIG. 17, in the second layer La2 of the unit 1d, the two flow path portions 12d3 and 12d4 are formed side by side in the width direction (direction A). The flow path portions 12d3 and 12d4 are separated from each other by the wall 13d2 so as not to communicate with each other. Both the two flow path portions 12d3 and 12d4 extend in the direction C, and open to an end surface of the connection protrusion 11a at the first end of the unit 1d. The flow path portions 12d3 and 12d4 are connected to the return portions 61a and 61b, respectively, at the second end of the unit 1d.

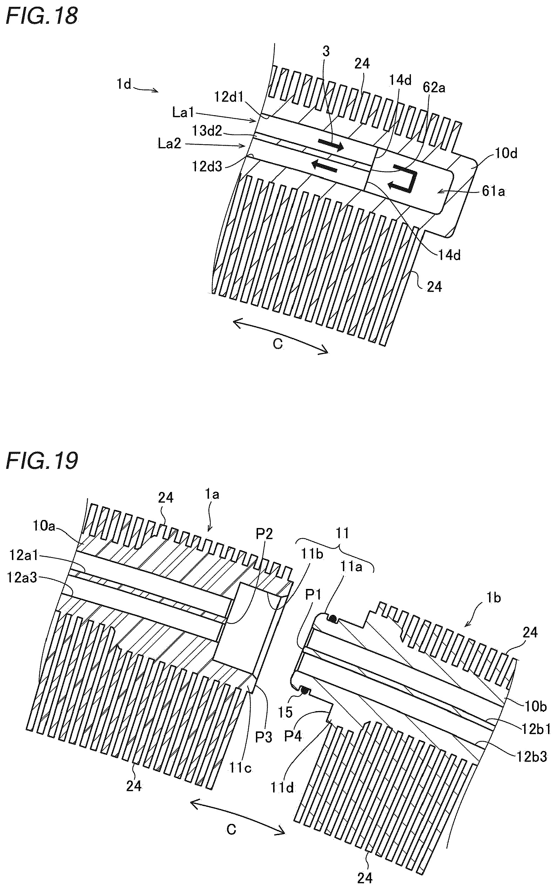

The return portion 61a and the return portion 61b are aligned in the width direction (direction A) of the unit body 10d and are separated from each other by the wall 13d2. Each of the return portions 61a and 61b penetrates, in the thickness direction, a wall that partitions the first layer La1 and the second layer La2. That is, as shown in FIG. 16, the return portion 61a includes a through-hole 62a that allows the first layer La1 and the second layer La2 to communicate with each other, and the return portion 61b includes a through-hole 62b that allows the first layer La1 and the second layer La2 to communicate with each other. Thus, as shown in FIG. 18, the return portion 61a connects a second end of the flow path portion 12d1 of the first layer La1 to a second end of the flow path portion 12d3 of the second layer La2 in the thickness direction of the unit body 10d. Although not shown, with a structure similar to that of the return portion 61a, the return portion 61b connects a second end of the flow path portion 12d2 of the first layer La1 to a second end of the flow path portion 12d4 of the second layer La2 in the thickness direction of the unit body 10d.

Therefore, in the unit 1d, the flow path portion 12d1, the flow path portion 12d3, and the return portion 61a define a series of U-turn flow path portions that are turned back in the thickness direction of the unit body 10d. The flow path portion 12d2, the flow path portion 12d4, and the return portion 61b define a series of U-turn flow path portions that are turned back in the thickness direction of the unit body 10d. Both ends of the respective U-turn flow path portions open to the end surface of the connection protrusion 11a. The unit 1d is a single-connection unit, and thus the second end of the unit 1d is closed by the wall 13d1, and the connector 11 is not provided at the second end.

### Connection of Each Unit

With the above configuration, each of the units 1a to 1d is mutually connected to another adjacent unit via the connector 11. The connector 11 is one of the connection protrusion 11a and the connection recess 11b that are insertable into and removable from each other. That is, two adjacent units 1 are connected to each other by fitting the connection protrusion 11a of one of the two adjacent units 1 into the connection recess 11b of the other of the two adjacent units 1. The connection structure is common to each unit 1.

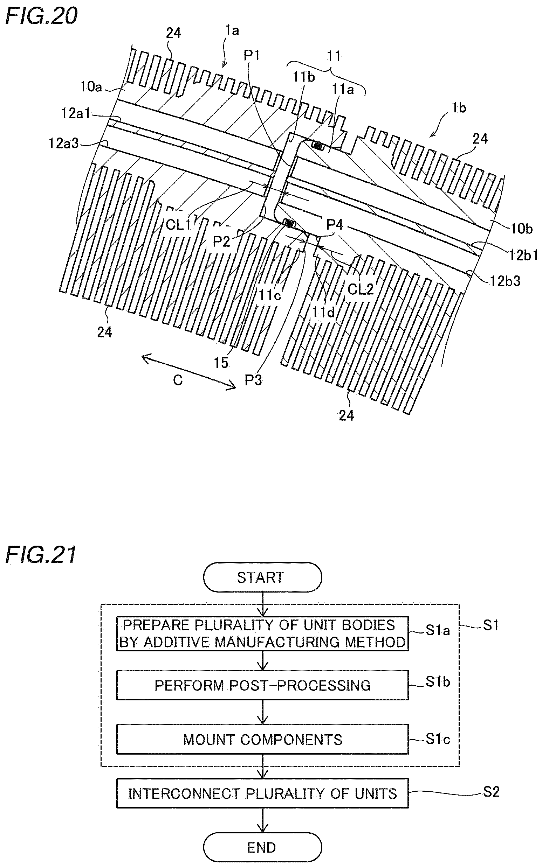

As shown in FIG. 19, the connection protrusion 11a is formed into an outer shape that matches the connection recess 11b so as to fit into the connection recess 11b (an inner peripheral portion of the peripheral wall 11c). The annular sealing member 15 is attached to the outer peripheral surface of the connection protrusion 11a. In an example of FIG. 19, the sealing member 15 is an O-ring. As shown in FIG. 20, when the connection protrusion 11a is fitted into the connection recess 11b, the sealing member 15 is sandwiched and crushed between the outer peripheral surface of the connection projection 11a and the inner peripheral surface of the connection recess 11b (peripheral wall 11c) such that a space between the connection protrusion 11a and the connection recess 11b is sealed in a liquid-tight state.

In the embodiment, as shown in FIG. 20, a gap CL1 is provided between a tip end surface P1 (see FIG. 19) of the connection protrusion 11a and an abutment surface P2 (see FIG. 19) of the connection recess 11b. That is, in a state in which the connection protrusion 11a is fitted into the connection recess 11b and sealed by the sealing member 15, the tip end surface P1 of the connection protrusion 11a is separated from the abutment surface P2 of the connection recess 11b by the predetermined gap CL1 in the connection direction (direction C). Although FIG. 20 shows the connector 11 between the unit 1a and the unit 1b, the connector 11 between other units is similar.

As shown in FIG. 20, a gap CL2 is provided between an end surface P3 of the peripheral wall 11c of the connection recess 11b facing the connection protrusion 11a and an end surface P4 of a circumferential protrusion 11d of the connection protrusion 11a facing the connection recess 11b. That is, in a state in which the connection protrusion 11a is fitted into the connection recess 11b, the end surface P3 of the peripheral wall 11c of the connection recess 11b facing the connection protrusion 11a is separated from the end surface P4 of the circumferential protrusion 11d of the connection protrusion 11a facing the connection recess 11b by the predetermined gap CL2 in the connection direction (direction C). Although FIG. 20 shows the connector 11 between the unit 1a and the unit 1b, the connector 11 between other units is similar.

Each of the plurality of units 1 includes the fixing portions 16 to fix each unit 1 to the mounting structure, and thus the units 1a to 1d are separately fixed to the mounting structure such as a bracket provided on the inner peripheral surface of the aircraft engine. On the other hand, each connector 11 does not employ a connection method such as fastening or welding that fixes relative positions. Each connector 11 connects two units 1 to each other in a state in which relative movement of the two mutually connected units 1 in the connection direction (direction C) is allowed. The gap CL1 is an interval formed between the connection protrusion 11a and the connection recess 11b when the units 1a to 1d are fixed with the respective fixing portions 16. Moreover, the gap CL2 is an interval formed between the circumferential protrusion 11d of the connection protrusion 11a and the circumferential wall 11c of the connection recess 11b when the units 1a to 1d are fixed with the respective fixing portions 16.

When the thermal expansion coefficient of the mounting structure (such as a bracket) of the aircraft engine is different from the thermal expansion coefficient of each of the units 1a to 1d, considering the difference in thermal expansion, there is a possibility that the position of the tip end surface P1 of the connection protrusion 11a of one unit 1 and the position of the abutment surface P2 of the connection recess 11b of another unit 1 vary in the connection direction (direction C). The gap CL1 can absorb this position variation caused by the difference in thermal expansion. The size of the gap CL1 is set according to the difference between the thermal expansion coefficient of the mounting structure of the aircraft engine and the thermal expansion coefficient of each of the units 1a to 1d.

The gap CL2 is provided to reduce or prevent contact between the end surface P4 of the circumferential protrusion 11d of one unit 1 facing the connection recess 11b and the end surface P3 of the peripheral wall 11c of another unit 1 facing the connection protrusion 11a when each unit 1 is connected with the gap CL1 between the tip end surface P1 of the connection protrusion 11a of one unit 1 and the abutment surface P2 of the connection recess 11b of another unit 1. There is a possibility that the position of the end surface P4 of the circumferential protrusion 11d of one unit 1 facing the connection recess 11b and the position of the end surface P3 of the peripheral wall 11c of another unit 1 facing the connection protrusion 11a vary in the connection direction (direction C) according to the difference between the thermal expansion coefficient of the mounting structure (such as a bracket) of the aircraft engine and the thermal expansion coefficient of each of the units 1a to 1d. Therefore, the gap CL2 has a size that allows the position variation caused by the difference between the thermal expansion coefficient of the mounting structure of the aircraft engine and the thermal expansion coefficient of each of the units 1a to 1d to be absorbed, and the size of the gap CL2 is set to a size that allows each unit 1 to be connected with the gap CL1 between the tip end surface P1 of the connection protrusion 11a of one unit 1 and the abutment surface P2 of the connection recess 11b of another unit 1.

As shown in FIG. 20, strictly speaking, each flow path portion 12 (12a1, 12a3) of one unit 1 (1a) and each flow path portion 12 (12b1, 12b3) of another unit 1 (1b) interconnected to one unit 1 (1a) at the connector 11 communicate with each other at the gap CL1. Although a portion of the fluid 3 may leak slightly between the flow path portions 12 through this gap CL1, the operation of the heat exchanger 100 is not affected due to the sufficiently small gap CL1.

### Operation of Heat Exchanger

Referring to FIG. 3, the heat exchange operation in the heat exchanger 100 with the above configuration is now described.

### Operation in Closed State of Valve

First, the normal operation in which the valve 42 of the bypass 41 is in a closed state is described. As shown in FIG. 3, as the aircraft engine operates, the flow (airflow) of the external fluid 4 in a substantially axial direction (direction A) is formed in the aircraft engine. Each external fin 24 (see FIG. 2) of the heat exchanger 100 is exposed to the flow of the external fluid 4.

The fluid 3 first flows in from the fluid inlet 22 of the unit 1a on the first end side of the heat exchanger 100 in the direction C. In the first layer La1, the fluid 3 passes through the flow path portion 12a1 of the unit 1a, the flow path portion 12b1 of the unit 1b, the flow path portion 12c1 of the unit 1c, and the flow path portion 12d1 of the unit 1d to the second end side of the heat exchanger 100. Then, the fluid 3 flows to the flow path portion 12d3 of the second layer La2 of the unit 1d via the return portion 61a of the unit 1d.

In the second layer La2, the fluid 3 passes through the flow path portion 12d3 of the unit 1d, the flow path portion 12c3 of the unit 1c, the flow path portion 12b3 of the unit 1b, and the flow path portion 12a3 of the unit 1a, and returns to the first end side of the heat exchanger 100. Then, the fluid 3 flows from the flow path portion 12a3 to the flow path portion 12a4 in the stratum (in the plane) of the second layer La2 of the unit 1a via the return portion 32 of the unit 1a.

In the second layer La2, the fluid 3 passes through the flow path portion 12a4 of the unit 1a, the flow path portion 12b4 of the unit 1b, the flow path portion 12c4 of the unit 1c, and the flow path portion 12d4 of the unit 1d to the second end side of the heat exchanger 100. Then, the fluid 3 flows to the flow path portion 12d2 of the first layer La1 of the unit 1d via the return portion 61b of the unit 1d.

In the first layer La1, the fluid 3 passes through the flow path portion 12d2 of the unit 1d, the flow path portion 12c2 of the unit 1c, the flow path portion 12b2 of the unit 1b, and the flow path portion 12a2 of the unit 1a, and returns to the first end side of the heat exchanger 100. Then, the fluid 3 flows out of the heat exchanger 100 from the flow path portion 12a2 of the unit 1a via the fluid outlet 23.

In the above flow process, the fluid 3 exchanges heat with an airflow flowing outside of the heat exchanger 100 via the internal fins 14a to 14d in the internal flow path 21 and the external fins 24. When the fluid 3 flows through the first layer La1, heat is released to the air mainly through the external fins 24 on the first surface 20a side. When the fluid 3 flows through the second layer La2, heat is released to the air mainly through the external fins 24 on the second surface 20b side. Consequently, the fluid 3 that has become high in temperature due to the operation of the aircraft engine releases heat to the outside air while flowing through the internal flow path 21 of the heat exchanger 100, lowers its temperature, and is returned to the aircraft engine. Operation in Open State of Valve

On the other hand, when the valve 42 of the bypass 41 is in an open state, the fluid 3 flows in from the fluid inlet 22 of the unit 1a, passes through the flow path portion 12a1 of the unit 1a, the flow path portion 12b1 of the unit 1b, the bypass 41 of the unit 1b, the flow path portion 12b2 of the unit 1b, and the flow path portion 12a2 of the unit 1a, and flows out of the heat exchanger 100 via the fluid outlet 23. A flow path resistance in a route from the flow path portion 12b1 of the unit 1b, passing through the bypass 41 and reaching the flow path portion 12b2 is sufficiently lower than a flow path resistance in a normal route reaching the flow path portion 12b2 without passing through the bypass 41, and thus most of the fluid 3 passes through the bypass 41 and flows to the fluid outlet 23. Therefore, when the valve 42 is in an open state, the fluid 3 shortcuts most of the internal flow path 21 and flows out of the heat exchanger 100, and thus a decrease in the temperature of the fluid 3 in the heat exchanger 100 is reduced or prevented. When the temperature of fluid 3 increases sufficiently as the operating time of the aircraft engine passes, and the fluidity is improved, a pressure difference acting on the valve 42 of the bypass 41 decreases, and the valve 42 switches from the open state to the closed state. Thus, the heat exchange (heat release) operation is switched to the normal route described above.

### Method for Manufacturing Heat Exchanger

A method for manufacturing the heat exchanger 100 according to the embodiment is now described.

As shown in FIG. 21, the method for manufacturing the heat exchanger 100 according to the embodiment includes a step S1 of preparing a plurality of units 1 in which the connector(s) 11 and the flow path portions 12 are integrally formed, and a step S2 of interconnecting the respective connectors 11 of the plurality of prepared units 1.

Specifically, in the step S1, four units 1a, 1b, 1c, and 1d of the heat exchanger main body 2 are prepared. In this step of preparing the plurality of units 1, each of the plurality of units 1 is formed into a curved shape. In the embodiment, in the step of preparing the plurality of units 1, each of the plurality of units 1 is formed into a curved shape along the connection direction (direction C), as shown in FIG. 2. The step S1 of preparing the plurality of units 1 includes steps S1a to S1c.

In the step S1a, the unit bodies 10a to 10d of the units 1 are integrally formed by an additive manufacturing method. Various additive manufacturing methods exist, but the additive manufacturing method to be used is not particularly limited. An example of the additive manufacturing method includes a powder bed fusion method. In the powder bed fusion method, a layer formation step of forming a material layer (with a thickness of several tens of micrometers to 1 mm) of powder material and a modeling step of irradiating the material layer with energy rays (such as laser beams or electron beams) to melt and solidify the powder material at the irradiated area are repeated such that a three-dimensional structure including a stack of solidified portions is prepared. In the embodiment, the powder material is an aluminum material (aluminum or an aluminum alloy).

Specifically, in the step S1a, a curved unit body 10a is integrally formed by the additive manufacturing method. That is, the unit body 10a is prepared as an integrated member (see FIG. 4) in which the connection recess 11b, the flow path portions 12a1 to 12a4, the plurality of external fins 24, the plurality of internal fins 14a, the two ports 31a and 31b, and the fixing portions 16 are connected via the wall 13a1 and the wall 13a2. The ports 31a and 31b may be joined separately by welding or the like.

Similarly, in the step S1a, a curved unit body 10b (see FIG. 8) including the two connectors 11 (the connection protrusion 11a and the connection recess 11b), the four flow path portions 12b1 to 12b4, the plurality of external fins 24, the plurality of internal fins 14b, the bypass 41 (excluding the valve 42), and the fixing portions 16 is integrally formed by the additive manufacturing method. The bypass 41 may be joined to the curved unit body 10b by welding.

Similarly, in the step S1a, a curved unit body 10c (see FIG. 12) including the two connectors 11 (the connection protrusion 11a and the connection recess 11b), the four flow path portions 12c1 to 12c4, the plurality of external fins 24, the plurality of internal fins 14c, and the fixing portions 16 is integrally formed by the additive manufacturing method.

Similarly, in the step S1a, a curved unit body 10d (see FIG. 15) including one connector 11 (connection protrusion 11a), the four flow path portions 12d1 to 12d4, the plurality of external fins 24, the plurality of internal fins 14d, the two return portions 61a and 61b, and the fixing portions 16 is integrally formed by the additive manufacturing method.

At this time, the internal fins 14a to 14d having mutually different shapes or arrangement patterns are formed in the flow path portions of the unit bodies 10a to 10d by the additive manufacturing method. The shapes or arrangement patterns of the internal fins 14a to 14d are not particularly limited. The shapes or arrangement patterns of the internal fins 14a to 14d are individually designed for the corresponding units 1a to 1d based on the specifications of the heat exchanger 100 required for an aircraft engine.

For example, the shapes or arrangement patterns of the internal fins 14a to 14d are different between a region between each of the fluid inlet 22 and the fluid outlet 23 and the bypass 41 and the other regions. For example, the internal fins 14a and 14b in the region between each of the fluid inlet 22 and the fluid outlet 23 and the bypass 41 (the flow path portions 12a1 and 12a2 of the unit 1a and the flow path portions 12b1 and 12b2 of the unit 1b) have a smaller fin density (number of internal fins in a given area) or total surface area as compared with the internal fins 14c and 14d in the other regions. Thus, when the valve 42 in the bypass 41 is in an open state, a decrease in the temperature of the fluid 3 can be reduced or prevented. Furthermore, the shapes or arrangement patterns of the internal fins 14a to 14d differ depending on the arrangement positions of the flow path portions 12 in a route from the fluid inlet 22 to the fluid outlet 23.

Each of the internal fins 14a to 14d may have a plate shape that is not a simple linear, such as an offset fin shape or a herringbone fin shape, may have a columnar shape, a convex shape, or another regular shape, or may have an irregular shape other than regular shapes. The shapes or arrangement patterns of the internal fins 14a to 14d are set differently for each unit 1, preferably for each flow path portion 12, by topology optimization, for example.

In the step S1a, the unit bodies 10a to 10d can be individually manufactured one by one using an additive modeling device.

Next, in the step S1b, post-processing is performed on each of the prepared unit bodies 10a to 10d. The post-processing includes heat treatment, additional processing, surface treatment, and the like, for example.

The heat treatment is a process to heat each of the unit bodies 10a to 10d to a predetermined temperature using a heat treatment device or the like. The purpose of the heat treatment is to adjust the mechanical strength of each of the unit bodies 10a to 10d within a desired design range and to stabilize the shape of each of the unit bodies 10a to 10d. This heat treatment is not a joining process such as fusion welding or brazing.

The additional processing is performed for each unit 1 by a machine tool. For example, processing is performed on a connection structure of a fluid coupling to the ports 31a and 31b of the unit 1a, and an assembly portion of the valve 42 on the bypass 41 of the unit 1b. The additional processing includes correction processing to correct the outer shapes of the connector(s) 11 (the connection protrusion 11a and/or the connection recess 11b) of each unit 1, adjustment processing for the surface roughness (finishing processing), and processing to form fixing structures (threaded portions) in the fixing portions 16 of each unit 1.

The surface treatment is, for example, a process to improve the corrosion resistances of unit bodies 10, such as chemical conversion coating treatment.

Next, in the step S1c, components are mounted. Specifically, the sealing member 15 is attached to the connection protrusion 11a of each of the unit bodies 10. The valve 42 is attached to the bypass 41 of the unit 1b. Through these steps, each of the units 1a to 1d is prepared.

Next, in the step S2, the connectors 11 of the plurality of prepared units 1a to 1d are connected to each other. That is, as shown in FIGS. 19 and 20, the connection protrusion 11a of the unit 1b is fitted into the connection recess 11b of the unit 1a. The connection protrusion 11a of the unit 1c is fitted into the connection recess 11b of the unit 1b. The connection protrusion 11a of the unit 1d is fitted into the connection recess 11b of the unit 1c. Thus, the heat exchanger main body 2 (see FIG. 1) including the four units 1a to 1d is formed.

That is, through the connection step S2, the heat exchanger main body 2 including the internal flow path 21 including the plurality of flow path portions 12, the fluid inlet 22 and the fluid outlet 23 connected to the internal flow path 21, and the plurality of external fins 24 formed on the outer surface is formed.

The heat exchanger main body 2 has a curved shape that is curved along the longitudinal direction so as to follow the curved surface S formed within the aircraft engine. Each of the units 1a to 1d is formed into a curved shape in advance, and thus it is not necessary to bend the heat exchanger main body 2.

In this manner, the heat exchanger 100 is manufactured. After the connection step S2, a step of assembling components necessary for the heat exchanger 100 to the heat exchanger main body 2 may be performed, for example.

The manufactured heat exchanger 100 is fixed to a predetermined location within the aircraft engine via the mounting structure (bracket) or the like. At this time, the units 1a to 1d are individually fastened and fixed to mounting portions with the fixing portions 16 provided in each of the units 1a to 1d of the heat exchanger 100. Thus, the heat exchanger 100 is fixed along the curved surface S formed within the aircraft engine.

With the heat exchanger 100 fixed, in each of the units 1a to 1d, a state is maintained in which a relative displacement between the tip end surface P1 and the abutment surface P2 is allowed by the gap CL1 (see FIG. 20) between the tip end surface P1 of the connection protrusion 11a and the abutment surface P2 of the connection recess 11b. Furthermore, the fluid inlet 22 and the fluid outlet 23 of the heat exchanger 100 are each connected to piping of the fluid circuit that circulates the fluid 3, for example.

Through the above steps, the heat exchanger 100 is assembled into the aircraft engine.

### Advantageous Effects of Embodiment

According to the embodiment, the following advantageous effects are achieved.

The method for manufacturing the heat exchanger 100 according to the embodiment includes the step of preparing the plurality of units 1 (1a to 1d) in which the connectors 11 and the flow path portions 12 are integrally formed, and the step of interconnecting the respective connectors 11 of the plurality of prepared units 1, as described above, and thus the heat exchanger main body 2 can be obtained by separately preparing the plurality of units 1 smaller than the heat exchanger main body 2 and interconnecting the units 1. Therefore, in the manufacturing process, it is only necessary to be able to handle each individual unit 1, and there is no need for large-scale equipment to process the entire heat exchanger main body 2. When one heat exchanger main body 2 includes four units 1a to 1d as in the embodiment, it is only necessary to process a workpiece (units 1a to 1d) that is about 1/4 the size of the heat exchanger 100, and thus the heat exchanger 100 can be manufactured using correspondingly smaller manufacturing equipment. Thus, even when the heat exchanger 100 is large, it is possible to prevent an increase in the size of the manufacturing equipment.

Similarly, in the heat exchanger 100 according to the embodiment, the plurality of units 1 integrally include the connectors 11 with other units 1 and the flow path portions 12, and the heat exchanger main body 2 includes, by interconnecting the plurality of units 1, the internal flow path 21 including the plurality of flow path portions 12, the fluid inlet 22 and the fluid outlet 23 connected to the internal flow path 21, and the plurality of external fins 24 formed on the outer surface, as described above, and thus the heat exchanger main body 2 can be obtained by separately preparing the plurality of units 1 smaller than the heat exchanger main body 2 and interconnecting the units 1. Therefore, in the manufacturing process, it is only necessary to be able to handle each individual unit 1, and there is no need for large-scale equipment to process the entire heat exchanger main body 2. Thus, even when the heat exchanger 100 is large, it is possible to prevent an increase in the size of the manufacturing equipment.

According to the embodiment, as described above, each of the plurality of units 1 is formed into a curved shape along the connection direction, and the heat exchanger main body 2 has a curved shape that is curved along the longitudinal direction so as to follow the curved surface S formed within the aircraft engine. Accordingly, when the heat exchanger 100 having a curved shape along the curved surface S within the aircraft engine is manufactured, the heat exchanger main body 2 can be formed into a curved shape as a whole by simply connecting the plurality of curved units 1. That is, it is not necessary to bend the entire heat exchanger main body 2, and thus there is no need to use equipment for bending the entire heat exchanger main body 2.

According to the embodiment, as described above, the curved unit body 10 (10a, 10b, 10c, or 10d) including the connector(s) 11, the flow path portions 12, and the two or more external fins 24 is integrally formed by the additive manufacturing method. Accordingly, the units 1 curved in advance can be prepared directly (without bending) by the additive manufacturing method without bending the units 1 formed into a flat plate shape. Thus, there is no need for equipment for bending. Consequently, in addition to effectively downsizing the manufacturing equipment, it is possible to simplify the manufacturing process. Furthermore, the connector(s) 11, the flow path portions 12, and the external fins 24 can be formed on the unit body 10 by the additive manufacturing method, and thus there is no need for cutting to prepare the unit body 10, or there is only a need for slight cutting (step S1b) for the purpose of shape correction. Furthermore, when the external fins 24 are formed by cutting, each external fin 24 is cut out from a plate material using a cutting tool, and thus a minimum interval between adjacent fins is determined by the size of the cutting tool. On the other hand, when the external fins 24 are formed by the additive manufacturing method, there is no restriction due to the size of the cutting tool, and thus the external fins 24 can be prepared with high density at an interval smaller than the size of the cutting tool.

According to the embodiment, as described above, the unit bodies 10a to 10d of the plurality of units 1 include the internal fins 14a to 14d having mutually different shapes or arrangement patterns, respectively, in the flow path portions 12. Accordingly, the shapes or arrangement patterns of the internal fins 14a to 14d in the flow path portions 12 of the unit bodies 10a to 10d can be made different in order to improve the heat exchange performance depending on the positions of the flow path portions 12 of the unit bodies 10a to 10d in the entire internal flow path 21 of the heat exchanger main body 2, for example. For example, when corrugated fin members are placed inside the heat exchanger main body 2 and used as the internal fins 14a to 14d, it is not easy to make the shapes or arrangement patterns of fins of the corrugated fin members different, but when the internal fins 14a to 14d are formed by the additive manufacturing method, the internal fins 14a to 14d can be formed with a high degree of freedom such that the shapes of the individual fins can be changed, for example.

According to the embodiment, as described above, among the plurality of units 1, the unit 1a includes the two ports 31a and 31b that function as the fluid inlet 22 and the fluid outlet 23. Accordingly, the ports 31a and 31b are provided in advance in the unit 1a such that the ports 31a and 31b can function as the fluid inlet 22 and the fluid outlet 23 of the heat exchanger main body 2 when a plurality of units 1 are connected. Therefore, unlike a case in which the fluid inlet 22 and the fluid outlet 23 are provided in post-processing after the heat exchanger main body 2 is prepared, for example, a step of separately providing the fluid inlet 22 and the fluid outlet 23 is not necessary.

According to the embodiment, as described above, among the plurality of units 1, the unit 1b includes the bypass 41 to connect one flow path portion 12b1 and another flow path portion 12b2 among the plurality of flow path portions 12b1 to 12b4 to each other via the valve 42. Accordingly, even when a bypass path is provided in the heat exchanger main body 2, the bypass path can be easily provided by simply preparing the unit 1b including the bypass 41 and connecting it to another unit 1.

According to the embodiment, as described above, among the plurality of units 1, the unit 1a and the unit 1d include the return portions (32, 61a, and 61b) to turn back the flow path portions 12 in the opposite direction. Accordingly, even when the heat exchanger 100 is manufactured with a structure in which the internal flow path 21 is turned back, a turned-back structure of the internal flow path 21 can be easily achieved by simply preparing the units 1a and 1d including the return portions (32, 61a, and 61b) and connecting them to the other units 1.

According to the embodiment, as described above, the plurality of units 1 include single-connection units (units 1a and 1d) each including the connector 11 on only one end surface, and multi-connection units (units 1b and 1c) each including the connectors 11 on two or more end surfaces, respectively. Accordingly, the heat exchanger main body 2 can be constructed by configuring both ends of the heat exchanger main body 2 with single-connection units, respectively, and configuring a portion between the single-connection units at both ends with multi-connection units. In this case, the heat exchanger main body 2 having a desired size (length) can be easily manufactured by selecting the number of multi-connection units.

According to the embodiment, as described above, the connector 11 is one of the connection protrusion 11a and the connection recess 11b that are insertable into and removable from each other, and the gap CL1 is provided between the tip end surface P1 of the connection protrusion 11a and the abutment surface P2 of the connection recess 11b. Accordingly, the relative displacement between the tip end surface P1 and the abutment surface P2 of the units 1 can be allowed by the gap CL1. That is, a relative displacement caused by a difference in thermal expansion coefficient between the heat exchanger main body 2 and a mounting location on which the heat exchanger main body 2 is mounted can be absorbed by the gap CL1 between the connectors 11. Furthermore, in the embodiment, as described above, the gap CL2 is provided between the end surface P3 of the peripheral wall 11c of the connection recess 11b facing the connection protrusion 11a and the end surface P4 of the circumferential protrusion 11d of the connection protrusion 11a facing the connection recess 11b. Accordingly, a relative displacement between the end surface P3 and the end surface P4 of the units 1 can be allowed by the gap CL2. That is, a relative displacement caused by a difference in thermal expansion coefficient between the heat exchanger main body 2 and the mounting location on which the heat exchanger main body 2 is mounted can be absorbed by the gap CL2 between the connectors 11.

According to the embodiment, as described above, the fixing portions 16 are formed in each of the plurality of units 1 to fix the unit 1 to the mounting structure. Accordingly, each unit 1 can be mounted and fixed to the mounting location on which the heat exchanger main body 2 is mounted, with the fixing portions 16 of each unit 1. Thus, the connected state of the plurality of units 1 can be ensured without firmly connecting (i.e., joining) the plurality of units 1 at the connectors 11. Even when each unit 1 is fixed to the mounting location, relative movement of each unit 1 is allowed by the gap CL1 between the connectors 11 described above, and thus a relative displacement between the tip end surface P1 and the abutment surface P2 due to the difference in thermal expansion coefficient between the heat exchanger main body 2 and the mounting location, and a position variation of each unit 1 due to other factors can be absorbed. Modification

For example, the present invention may alternatively be applied to a heat exchanger other than a surface cooler as long as the heat exchanger includes the internal flow path formed inside the heat exchanger and the external fins formed on the outer surface of the heat exchanger. The heat exchanger according to the present invention does not need to be installed along the curved surface S within the aircraft engine. The heat exchanger may be provided on a moving body other than an aircraft, or may be provided on a fixed device other than a moving body, for example.

When an installation surface for the heat exchanger is not curved, it is not necessary to form each unit into a curved shape.

The type of fluid is not particularly limited. The fluid 3 may alternatively be any fluid.

In the present invention, each of the units 1 may alternatively be made of stainless steel, titanium, copper, or Inconel (registered trademark), for example.

In the present invention, each of the units 1 may alternatively be prepared by a method other than the additive manufacturing method. For example, each unit 1 may be prepared by joining assemblies such as plate materials and block materials by brazing or the like. Even in that case, the size of each of the units 1 can be decreased as compared with a case in which the heat exchanger main body 2 is prepared by joining a component having substantially the same size as that of the heat exchanger main body 2 by brazing or the like, and thus an increase in the size of the manufacturing equipment can be prevented.

Each unit 1 may alternatively have a single layer structure including only one internal flow path 21 in the thickness direction, or may alternatively have a structure of three or more layers.

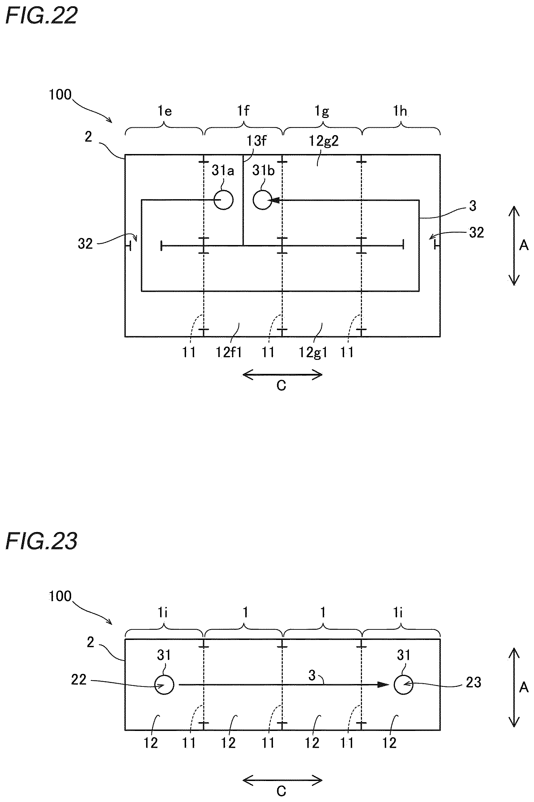

In the present invention, as shown in FIG. 22, a unit 1f including ports 31a and 31b may alternatively be configured as a multi-connection unit and placed between both ends of a heat exchanger main body 2. FIG. 22 shows the unit 1f in which the port 31a is separated from the port 31b by a wall 13f. A fluid 3 flows from the port 31a to the port 31b through a return portion 32 of a unit 1e, a flow path portion 12f1 of the unit 1f, a flow path portion 12g1 of a unit 1g, a return portion 32 of a unit 1h, and a flow path portion 12g2 of the unit 1g.

In the present invention, as shown in FIG. 23, one port may alternatively be provided in one unit 1. In FIG. 23, two units 1i each including one port 31 are provided such that one port 31 can be used as a fluid inlet 22, and the other port 31 can be used as a fluid outlet 23.

As shown in FIG. 23, each unit 1 may alternatively include only one flow path portion 12 in the width direction. Alternatively, each unit 1 may include three or more flow path portions 12 in the width direction.

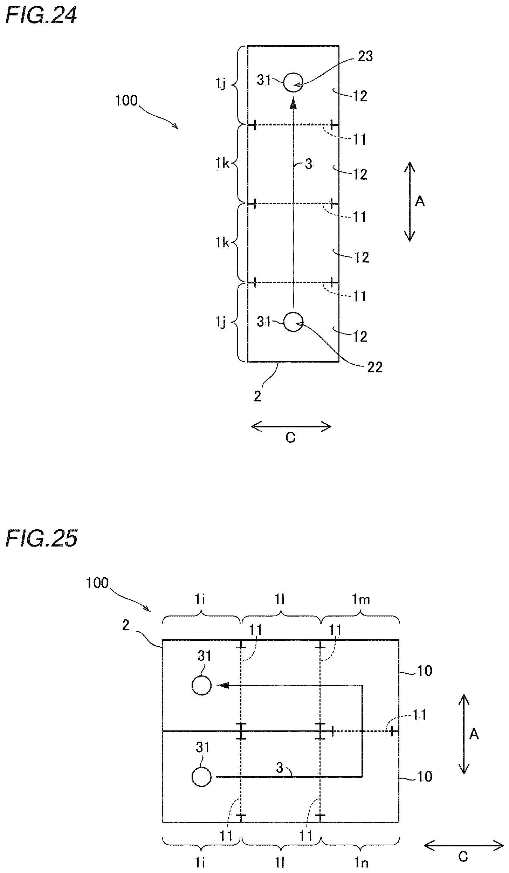

In the present invention, the plurality of units 1 may alternatively be connected in the width direction (direction A) of the heat exchanger main body 2, or may alternatively be connected in both the longitudinal direction (direction C) and the width direction of the heat exchanger main body 2. For example, as shown in FIG. 24, each of units may include a connector(s) 11 on a first end surface and/or a second end surface in the width direction (direction A) of a heat exchanger main body 2. In FIG. 24, the heat exchanger main body 2 includes four units (two units 1j and two units 1k). Each of the two units 1k includes the connectors 11 on the first end surface and the second end surface in the width direction (direction A) of the heat exchanger main body 2, and each of the units 1j includes the connector 11 on the first end surface or the second end surface in the width direction (direction A) of the heat exchanger main body 2. In an example shown in FIG. 24, similarly to the above embodiment, it is not necessary to bend the entire heat exchanger main body 2, and thus there is no need to use equipment for bending the entire heat exchanger main body 2.

Furthermore, for example, as shown in FIG. 25, some units may include connectors 11 on a first end surface and a second end surface perpendicular to the first end surface such that a flow path portion 12 is bent. In FIG. 25, a heat exchanger main body 2 includes six units (two units 1i, two units 11, a unit 1m, and a unit 1n), and each of the two units 1m and 1n on a second end side of the heat exchanger main body 2 includes the connectors 11 on two end surfaces that are perpendicular to each other.

The number of units 1 of the heat exchanger main body 2 is not particularly limited as long as it is plural. The number of units 1 of the heat exchanger main body 2 may be two, three, or five or more.

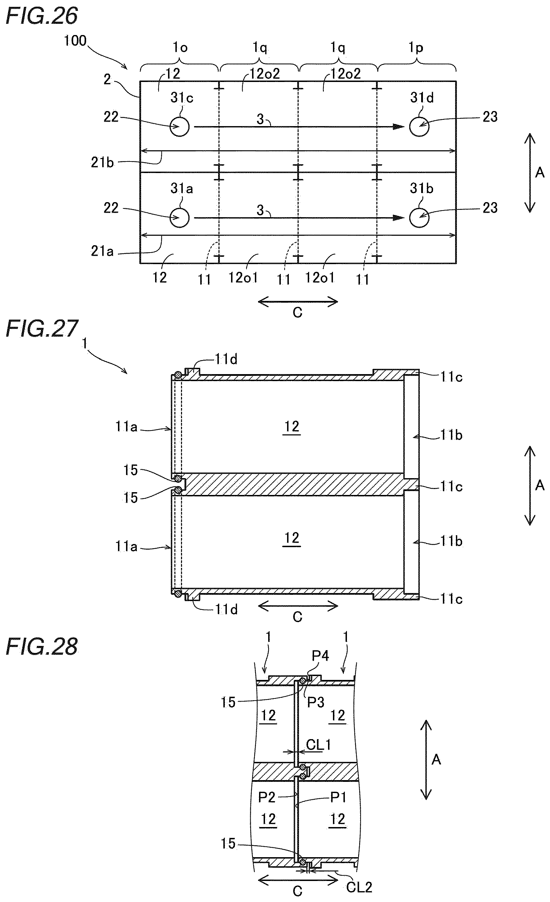

In the present invention, the heat exchanger main body 2 may alternatively include a plurality of independent internal flow paths 21. For example, FIG. 26 shows an example in which two independent internal flow paths 21a and 21b are configured by four units in which two flow path portions 12 are provided in the width direction (direction A). A unit 1o at a first end in a direction C includes two ports 31a and 31c that serve as fluid inlets 22, and the two ports 31a and 31c are partitioned by a wall. A unit 1p at a second end in the direction C also includes two ports 31b and 31d that serve as fluid outlets 23, and the two ports 31b and 31d are partitioned by a wall. Two central units 1q in the direction C each include two independent flow path portions 12o1 and 12o2. Thus, the heat exchanger main body 2 includes a first internal flow path 21a from the port 31a to the port 31b through the flow path portions 12o1 of the two units 1q, and a second internal flow path 21b from the port 31c to the port 31d through the flow path portions 12o2 of the two units 1q. Different types of fluids 3 can flow through the first internal flow path 21a and the second internal flow path 21b.

In this case, connectors 11 of the flow path portions of the first internal flow path 21a and connectors 11 of the flow path portions of the second internal flow path 21b can be provided independently. In FIG. 27, one connection protrusion 11a is provided on the first end side of each of the two flow path portions 12 aligned in the width direction (direction A), and one connection recess 11b is provided on the second end side of each of the two flow path portions 12. A sealing member 15 is separately provided on each connection protrusion 11a. Therefore, as shown in FIG. 28, when two adjacent units 1 are connected to each other, the flow path portions 12 facing each other in the direction C are connected to each other by separate connection protrusions 11a and connection recesses 11b. In this configuration, even when a gap CL1 is provided between the connection protrusion 11a and the connection recess 11b, there is no communication with the adjacent flow path portion 12.

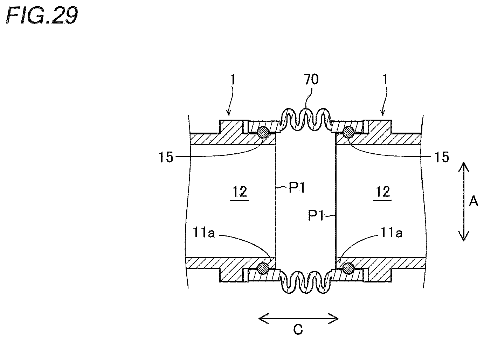

In the present invention, the connectors 11 of two adjacent units 1 may alternatively be connected to each other via other connecting members. For example, in FIG. 29, connectors 11 of two adjacent units 1 are both connection protrusions 11a, and the connection protrusions 11a are connected to each other by connecting members 70 having a bellows structure. In this case, both ends of the connecting members 70 each have a structure corresponding to the connection recess 11b. Conversely, the connection protrusions 11a may be provided at both ends of the connecting members 70, and connected to the connection recesses 11b of the two units 1.

In the present invention, the sealing members 15 may alternatively be gaskets or packings other than O-rings, for example.

In the present invention, a plurality of units 1b each including one bypass 41 may alternatively be provided, and a plurality of bypasses 41 may alternatively be provided in the heat exchanger main body 2 as a whole. With this configuration, the number of valves 42 that switch from the closed state to the open state changes depending on the pressure of the fluid 3 (oil). That is, depending on the pressure of the fluid 3, a portion of the internal flow path 21 that is shortcut changes. Thus, the length of the internal flow path 21 changes depending on the fluid pressure, and thus the degree of increase in the pressure of the fluid 3 can be adjusted.

When the fluid 3 does not need to bypass (shortcut) the internal flow path 21, the unit 1b including the bypass 41 may not be provided.

In the present invention, the unit may alternatively include a thermo valve. The unit including the thermo valve may be provided in place of the unit 1b, or may be used in combination with the unit 1b.

When it is not necessary to turn back the internal flow path 21, the units including the return portions may not be provided.

In the present invention, the units 1 may alternatively have a configuration in which the external fins 24 are formed on one of the first surface 20a side and the second surface 20b side, and the external fins 24 are not formed on the other of the first surface 20a side and the second surface 20b side. Alternatively, the plurality of external fins 24 may not be parallel to each other, and the intervals (pitches) between the fins may not be constant.

In the present invention, when there is a degree of freedom in the structure of the fluid circuit that supplies and discharges the fluid 3 to and from the heat exchanger 100, it is conceivable to make a connector on the fluid circuit side the same shape as that of the connection protrusion 11a or the connection recess 11b, for example. In this case, instead of the unit 1a (single-connection unit), a multi-connection unit including the connection protrusion 11a or the connection recess 11b suitable for the connector on the fluid circuit side may be arranged at the first end or the second end of the heat exchanger main body 2 to fit into the connector on the fluid circuit side.

In the present invention, at the connectors 11, the two units 1 may alternatively be connected to each other in a fixed state in which relative movement is not allowed by fastening or joining (such as welding).

In the present invention, the fixing portions 16 may alternatively be provided only in some of the plurality of units 1. Alternatively, the fixing portions 16 may not be provided in the units 1.

In the present invention, the external fluid 4 may alternatively flow between the first layer La1 and the second layer La2 of each unit. Furthermore, in the present invention, the external fluid 4 may alternatively flow not only on the first surface 20a and the second surface 20b of the heat exchanger main body 2, but also between the first layer La1 and the second layer La2 of each unit. In these cases, a flow path of the external fluid 4 flowing between the first layer La1 and the second layer La2 may be provided throughout the heat exchanger or at a position corresponding to a portion of the heat exchanger between the first layer La1 and the second layer La2.

In the present invention, the two ports 31a and 31b may alternatively be provided on the second surface 20b side of the unit body 10a.

In the present invention, the fixing portions 16 may alternatively be provided on the second surface 20b side of the unit body 10a. Furthermore, the fixing portions 16 may be similarly provided on the second surface 20b side of the unit bodies 10b, 10c, and 10d.

In the present invention, the bypass 41 may alternatively be provided on the second surface 20b side of the unit body 10b.

## Claims

1. A method for manufacturing a heat exchanger, the method comprising:
preparing a plurality of units (1) each including a connector (11) and a flow path portion (12) and a plurality of external fins (24) that are integrally formed; and
interconnecting the connector (11) of each of the plurality of units (1) that have been prepared; wherein
by the interconnecting;
an internal flow path (21) including a plurality of the flow path portions (12) is formed,
a fluid inlet (22) and a fluid outlet (23) both are connected to the internal flow path (21),
the plurality of external fins (24) are formed on an outer surface of the heat exchanger main body (2),
at least one of the plurality of units (1) includes one or more ports (31) connected the flow path portions (12); and
the ports (31) function as the fluid inlet (22) or the fluid outlet (23) or both.

2. The method for manufacturing a heat exchanger according to claim 1, wherein
in the preparing the plurality of units (1), each of the plurality of units (1) is formed into a curved shape; and
the heat exchanger main body (2) has a curved shape that is curved along a curved surface (S) formed within an aircraft engine.

3. The method for manufacturing a heat exchanger according to claim 2, wherein in the preparing the plurality of units (1), unit bodies (10) of the plurality of units (1), the unit bodies (10) each having the curved shape and including the connector (11), the flow path portion (12), and two or more external fins (24) are integrally formed by an additive manufacturing method.

4. The method for manufacturing a heat exchanger according to claim 3, wherein the unit bodies (10) of the plurality of units (1) include internal fins (14a, 14b, 14c, 14d) having mutually different shapes or arrangement patterns in the flow path portions (12).

5. The method for manufacturing a heat exchanger according to any one of claims 1 to 3, wherein at least one of the plurality of units (1) includes one or more ports (31) operable to function as the fluid inlet (22) or the fluid outlet (23).

6. The method for manufacturing a heat exchanger according to any one of claims 1 to 3, wherein at least one of the plurality of units (1) includes a plurality of the flow path portions (12) and a bypass (41) to connect one of the plurality of flow path portions (12) to another one of the plurality of flow path portions (12) via a valve (42).

7. The method for manufacturing a heat exchanger according to any one of claims 1 to 3, wherein at least one of the plurality of units (1) includes a return portion (32, 61a, 61b) to turn back the flow path portion (12) in an opposite direction.

8. The method for manufacturing a heat exchanger according to any one of claims 1 to 3, wherein the plurality of units (1) include:
a single-connection unit including the connector (11) on only one end surface; and
a multi-connection unit including the connector (11) on each of two or more end surfaces.

9. The method for manufacturing a heat exchanger according to any one of claims 1 to 3, wherein
the connector (11) is one of a connection protrusion (11a) and a connection recess (11b) that are insertable into and removable from each other; and
in the interconnecting, a gap (CL1) is provided between a tip end surface (P1) of the connection protrusion (11a) and an abutment surface (P2) of the connection recess (11b).

10. The method for manufacturing a heat exchanger according to claim 9, wherein in the preparing the plurality of units (1), a fixing portion (16) operable to fix each of the plurality of units (1) to a mounting structure is formed in each of the plurality of units (1).

11. A heat exchanger comprising:
a heat exchanger main body (2) configured by connecting a plurality of units (1) to each other; wherein
each of the plurality of units (1) integrally includes;
a connector (11) with another unit (1),
a flow path portion (12), and
a plurality of external fins (24);
the heat exchanger main body (2) includes;
an internal flow path (21) including a plurality of the flow path portions (12),
a fluid inlet (22) and a fluid outlet (23) both connected to the internal flow path (21),
the plurality of external fins (24) formed on an outer surface of the heat exchanger main body (2);
at least one of the plurality of units (1) includes one or more ports (31) connected the flow path portions (12); and
the ports (31) function as the fluid inlet (22) or the fluid outlet (23) or both.

12. The heat exchanger according to claim 11,
wherein
each of the plurality of units (1) has a curved shape; and
the heat exchanger main body (2) has a curved shape that is curved along a curved surface (S) formed within an aircraft engine.

13. The heat exchanger according to claim 12,
wherein
the plurality of units (1) respectively include unit bodies (10) each having the curved shape and including the connector (11), the flow path portion (12), and two or more external fins (24); and
the unit bodies (10) are integrated members formed by an additive manufacturing method.

14. The heat exchanger according to claim 13,
wherein the unit bodies (10) of the plurality of units (1) include internal fins (14a, 14b, 14c, 14d) having mutually different shapes or arrangement patterns in the flow path portions (12).

15. The heat exchanger according to any one of claims 11 to 13, wherein at least one of the plurality of units (1) includes one or more ports (31) operable to function as the fluid inlet (22) or the fluid outlet (23).

16. The heat exchanger according to any one of claims 11 to 13, wherein at least one of the plurality of units (1) includes a plurality of the flow path portions (12) and a bypass (41) to connect one of the plurality of flow path portions (12) to another one of the plurality of flow path portions (12) via a valve (42).

17. The heat exchanger according to any one of claims 11 to 13, wherein at least one of the plurality of units (1) includes a return portion (32, 61a, 61b) to turn back the flow path portion (12) in an opposite direction.

18. The heat exchanger according to any one of claims 11 to 13, wherein the plurality of units (1) include:
a single-connection unit including the connector (11) on only one end surface; and
a multi-connection unit including the connector (11) on each of two or more end surfaces.

19. The heat exchanger according to any one of claims 11 to 13, wherein
the connector (11) is one of a connection protrusion (11a) and a connection recess (11b) that are insertable into and removable from each other; and
a gap (CL1) is provided between a tip end surface (P1) of the connection protrusion (11a) and an abutment surface (P2) of the connection recess (11b).

20. The heat exchanger according to claim 19, wherein each of the plurality of units (1) further includes a fixing portion (16) to fix each of the plurality of units (1) to a mounting structure.

## Patentansprüche

1. Verfahren zur Herstellung eines Wärmetauschers, wobei das Verfahren umfasst:
das Vorbereiten mehrerer Einheiten (1), die jeweils einen Verbinder (11) und einen Strömungswegabschnitt (12) sowie mehrere Außenrippen (24) umfassen, die einstückig ausgebildet sind; und
das Verbinden des Verbinders (11) jeder der vorbereiteten Einheiten (1); wobei
durch das Verbinden;
ein innerer Strömungsweg (21) ausgebildet wird, der mehrere der Strömungswegabschnitte (12) umfasst,
ein Fluideinlass (22) und ein Fluidauslass (23) beide mit dem inneren Strömungsweg (21) verbunden werden,
die mehreren Außenrippen (24) an einer Außenfläche des Wärmetauscher-Hauptkörpers (2) ausgebildet werden,
mindestens eine der mehreren Einheiten (1) einen oder mehrere Anschlüsse (31) umfasst, die mit den Strömungswegabschnitten (12) verbunden sind; und
die Anschlüsse (31) als der Fluideinlass (22) oder als der Fluidauslass (23) oder als beides dienen.

2. Verfahren zur Herstellung eines Wärmetauschers nach Anspruch 1, wobei
beim Vorbereiten der mehreren Einheiten (1) jede der mehreren Einheiten (1) in eine gekrümmte Form ausgebildet wird; und
der Wärmetauscher-Hauptkörper (2) eine gekrümmte Form aufweist, die entlang einer innerhalb eines Flugzeugtriebwerks ausgebildeten gekrümmten Oberfläche (S) gekrümmt ist.

3. Verfahren zur Herstellung eines Wärmetauschers nach Anspruch 2, wobei beim Vorbereiten der mehreren Einheiten (1) Einheitenkörper (10) der mehreren Einheiten (1), wobei die Einheitenkörper (10) jeweils die gekrümmte Form aufweisen und den Verbinder (11), den Strömungswegabschnitt (12) sowie zwei oder mehr Außenrippen (24) umfassen, durch ein additives Herstellungsverfahren einstückig ausgebildet werden.

4. Verfahren zur Herstellung eines Wärmetauschers nach Anspruch 3, wobei die Einheitenkörper (10) der mehreren Einheiten (1) Innenrippen (14a, 14b, 14c, 14d) umfassen, die in den Strömungswegabschnitten (12) sich voneinander unterscheidende Formen oder Anordnungsmuster aufweisen.

5. Verfahren zur Herstellung eines Wärmetauschers nach einem der Ansprüche 1 bis 3, wobei mindestens eine der mehreren Einheiten (1) einen oder mehrere Anschlüsse (31) umfasst, die dazu eingerichtet sind, als der Fluideinlass (22) oder als der Fluidauslass (23) zu dienen.

6. Verfahren zur Herstellung eines Wärmetauschers nach einem der Ansprüche 1 bis 3, wobei mindestens eine der mehreren Einheiten (1) mehrere der Strömungswegabschnitte (12) und einen Bypass (41) umfasst, um einen der mehreren Strömungswegabschnitte (12) über ein Ventil (42) mit einem anderen der mehreren Strömungswegabschnitte (12) zu verbinden.

7. Verfahren zur Herstellung eines Wärmetauschers nach einem der Ansprüche 1 bis 3, wobei mindestens eine der mehreren Einheiten (1) einen Rückführungsabschnitt (32, 61a, 61b) aufweist, um den Strömungswegabschnitt (12) in eine entgegengesetzte Richtung zurückzuführen.

8. Verfahren zur Herstellung eines Wärmetauschers nach einem der Ansprüche 1 bis 3, wobei die mehreren Einheiten (1) umfassen:
eine Einfachverbindungseinheit, die den Verbinder (11) nur an einer Endfläche aufweist; und
eine Mehrfachverbindungseinheit, die den Verbinder (11) an jeder von zwei oder mehr Endflächen aufweist.

9. Verfahren zur Herstellung eines Wärmetauschers nach einem der Ansprüche 1 bis 3, wobei
der Verbinder (11) entweder ein Verbindungsvorsprung (11a) oder eine Verbindungsausnehmung (11b) ist, die ineinander einsetzbar und voneinander entfernbar sind; und
beim Verbinden ein Spalt (CL1) zwischen einer Spitzenendfläche (P1) des Verbindungsvorsprungs (11a) und einer Anlagefläche (P2) der Verbindungsausnehmung (11b) vorgesehen wird.

10. Verfahren zur Herstellung eines Wärmetauschers nach Anspruch 9, wobei beim Vorbereiten der mehreren Einheiten (1) in jeder der mehreren Einheiten (1) ein Befestigungsabschnitt (16) ausgebildet wird, der dazu eingerichtet ist, jede der mehreren Einheiten (1) an einer Montagestruktur zu befestigen.

11. Wärmetauscher, umfassend:
einen Wärmetauscher-Hauptkörper (2), gebildet durch Verbinden mehrerer Einheiten (1) miteinander; wobei
jede der mehreren Einheiten (1) einstückig umfasst;
einen Verbinder (11) zu einer anderen Einheit (1), einen Strömungswegabschnitt (12), und
mehrere Außenrippen (24);
der Wärmetauscher-Hauptkörper (2) umfasst;
einen inneren Strömungsweg (21), der mehrere der Strömungswegabschnitte (12) umfasst,
einen Fluideinlass (22) und einen Fluidauslass (23), die beide mit dem inneren Strömungsweg (21) verbunden sind,
die mehreren Außenrippen (24), die an einer Außenfläche des Wärmetauscher-Hauptkörpers (2) ausgebildet sind;
mindestens eine der mehreren Einheiten (1) einen oder mehrere Anschlüsse (31) umfasst, die mit den Strömungswegabschnitten (12) verbunden sind; und
die Anschlüsse (31) als der Fluideinlass (22) oder als der Fluidauslass (23) oder als beides dienen.

12. Wärmetauscher nach Anspruch 11, wobei
jede der mehreren Einheiten (1) eine gekrümmte Form aufweist; und
der Wärmetauscher-Hauptkörper (2) eine gekrümmte Form aufweist, die entlang einer innerhalb eines Flugzeugtriebwerks ausgebildeten gekrümmten Oberfläche (S) gekrümmt ist.

13. Wärmetauscher nach Anspruch 12, wobei
die mehreren Einheiten (1) jeweils Einheitenkörper (10) umfassen, die jeweils die gekrümmte Form aufweisen und den Verbinder (11), den Strömungswegabschnitt (12) sowie zwei oder mehr Außenrippen (24) umfassen; und
die Einheitenkörper (10) durch ein additives Herstellungsverfahren ausgebildete einstückige Bauteile sind.

14. Wärmetauscher nach Anspruch 13, wobei die Einheitenkörper (10) der mehreren Einheiten (1) Innenrippen (14a, 14b, 14c, 14d) umfassen, die in den Strömungswegabschnitten (12) sich voneinander unterscheidende Formen oder Anordnungsmuster aufweisen.

15. Wärmetauscher nach einem der Ansprüche 11 bis 13, wobei mindestens eine der mehreren Einheiten (1) einen oder mehrere Anschlüsse (31) umfasst, die dazu eingerichtet sind, als der Fluideinlass (22) oder als der Fluidauslass (23) zu dienen.

16. Wärmetauscher nach einem der Ansprüche 11 bis 13, wobei mindestens eine der mehreren Einheiten (1) mehrere der Strömungswegabschnitte (12) und einen Bypass (41) umfasst, um einen der mehreren Strömungswegabschnitte (12) über ein Ventil (42) mit einem anderen der mehreren Strömungswegabschnitte (12) zu verbinden.

17. Wärmetauscher nach einem der Ansprüche 11 bis 13, wobei mindestens eine der mehreren Einheiten (1) einen Rückführungsabschnitt (32, 61a, 61b) aufweist, um den Strömungswegabschnitt (12) in eine entgegengesetzte Richtung zurückzuführen.

18. Wärmetauscher nach einem der Ansprüche 11 bis 13, wobei die mehreren Einheiten (1) umfassen:
eine Einfachverbindungseinheit, die den Verbinder (11) nur an einer Endfläche aufweist; und
eine Mehrfachverbindungseinheit, die den Verbinder (11) an jeder von zwei oder mehr Endflächen aufweist.

19. Wärmetauscher nach einem der Ansprüche 11 bis 13, wobei
der Verbinder (11) entweder ein Verbindungsvorsprung (11a) oder eine Verbindungsausnehmung (11b) ist, die ineinander einsetzbar und voneinander entfernbar sind; und
ein Spalt (CL1) zwischen einer Spitzenendfläche (P1) des Verbindungsvorsprungs (11a) und einer Anlagefläche (P2) der Verbindungsausnehmung (11b) vorgesehen ist.

20. Wärmetauscher nach Anspruch 19, wobei jede der mehreren Einheiten (1) ferner einen Befestigungsabschnitt (16) umfasst, um jede der mehreren Einheiten (1) an einer Montagestruktur zu befestigen.

## Revendications

1. Procédé de fabrication d'un échangeur de chaleur, le procédé comprenant:
la préparation d'une pluralité d'unités (1), chacune comprenant un connecteur (11) et une partie de voie d'écoulement (12), et d'une pluralité d'ailettes externes (24) qui sont formées de façon intégrée; et
l'interconnexion du connecteur (11) de chacune de la pluralité d'unités (1) qui ont été préparées; dans lequel
l'interconnexion permet;
qu'une voie d'écoulement interne (21) comprenant une pluralité de parties de voie d'écoulement (12) soit formée,
qu'une entrée de fluide (22) et une sortie de fluide (23) soient raccordées toutes deux à la voie d'écoulement interne (21),
que la pluralité d'ailettes externes (24) soient formées sur une surface externe d'un corps principal (2) de l'échangeur de chaleur,
au moins une de la pluralité d'unités (1) comprend un ou plusieurs orifices (31) raccordés aux parties de voie d'écoulement (12); et
les orifices (31) font office d'entrée de fluide (22) et/ou de sortie de fluide (23).

2. Procédé de fabrication d'un échangeur de chaleur selon la revendication 1, dans lequel
lors de la préparation de la pluralité d'unités (1), chacune de la pluralité d'unités (1) est mise en forme incurvée; et
le corps principal (2) de l'échangeur de chaleur présente une forme incurvée qui est incurvée le long d'une surface incurvée (S) formée à l'intérieur d'un moteur d'avion.

3. Procédé de fabrication d'un échangeur de chaleur selon la revendication 2, dans lequel lors de la préparation de la pluralité d'unités (1), des corps (10) de la pluralité d'unités (1), chacun des corps (10) présentant une forme incurvée et comprenant le connecteur (11), la partie de voie d'écoulement (12), et deux ou plusieurs ailettes externes (24) sont formés de façon intégrée par un procédé de fabrication additive.

4. Procédé de fabrication d'un échangeur de chaleur selon la revendication 3, dans lequel les corps (10) de la pluralité d'unités (1) comprennent des ailettes internes (14a, 14b, 14c, 14d) présentant des formes ou des motifs d'agencement différents mutuellement dans les parties de voie d'écoulement (12).

5. Procédé de fabrication d'un échangeur de chaleur selon l'une quelconque des revendications 1 à 3, dans lequel au moins une de la pluralité d'unités (1) comprend un ou plusieurs orifices (31) permettant de faire office d'entrée de fluide (22) ou de sortie de fluide (23).

6. Procédé de fabrication d'un échangeur de chaleur selon l'une quelconque des revendications 1 à 3, dans lequel au moins une de la pluralité d'unités (1) comprend une pluralité de parties de voie d'écoulement (12) et une dérivation (41) pour raccorder une de la pluralité de parties de voie d'écoulement (12) à une autre de la pluralité de parties de voie d'écoulement (12) via une vanne (42).

7. Procédé de fabrication d'un échangeur de chaleur selon l'une quelconque des revendications 1 à 3, dans lequel au moins une de la pluralité d'unités (1) comprend une partie de retour (32, 61a, 61b) pour inverser la partie de voie d'écoulement (12) dans une direction opposée.

8. Procédé de fabrication d'un échangeur de chaleur selon l'une quelconque des revendications 1 à 3, dans lequel la pluralité d'unités (1) comprennent:
une unité à raccordement unique comprenant le connecteur (11) sur une seule surface d'extrémité; et
une unité à raccordements multiples comprenant le connecteur (11) sur chacune de deux ou plusieurs surfaces d'extrémité.

9. Procédé de fabrication d'un échangeur de chaleur selon l'une quelconque des revendications 1 à 3, dans lequel
le connecteur (11) est une saillie de raccordement (11a) ou un évidement de raccordement (11b), emboîtable l'un dans l'autre, et amovible l'un de l'autre; et
lors de l'interconnexion, un jeu (CL1) est ménagé entre une surface d'extrémité en pointe (P1) de la saillie de raccordement (11a) et une surface d'appui (P2) de l'évidement de raccordement (11b).

10. Procédé de fabrication d'un échangeur de chaleur selon la revendication 9, dans lequel lors de la préparation de la pluralité d'unités (1), une partie de fixation (16) permettant de fixer chacune de la pluralité d'unités (1) à une structure de montage est formée dans chacune de la pluralité d'unités (1).

11. Échangeur de chaleur comprenant:
un corps principal (2) de l'échangeur de chaleur configuré par le raccordement mutuel d'une pluralité d'unités (1); dans lequel
chacune de la pluralité d'unités (1) comprend, de façon intégrée;
un connecteur (11) avec une autre unité (1),
une partie de voie d'écoulement (12), et
une pluralité d'ailettes externes (24);
le corps principal (2) de l'échangeur de chaleur comprend;
une voie d'écoulement interne (21) comprenant une pluralité de parties de voie d'écoulement (12),
une entrée de fluide (22) et une sortie de fluide (23) raccordées toutes deux à la voie d'écoulement interne (21),
la pluralité d'ailettes externes (24) formées sur une surface externe du corps principal (2) de l'échangeur de chaleur;
au moins une de la pluralité d'unités (1) comprend un ou plusieurs orifices (31) raccordés aux parties de voie d'écoulement (12); et
les orifices (31) font office d'entrée de fluide (22) et/ou de sortie de fluide (23).

12. Échangeur de chaleur selon la revendication 11, dans lequel
chacune de la pluralité d'unités (1) présente une forme incurvée; et
le corps principal (2) de l'échangeur de chaleur présente une forme incurvée qui est incurvée le long d'une surface incurvée (S) formée à l'intérieur d'un moteur d'avion.

13. Échangeur de chaleur selon la revendication 12, dans lequel
la pluralité d'unités (1) comprennent respectivement des corps (10) des unités, chacun des corps présentant une forme incurvée et comprenant le connecteur (11), la partie de voie d'écoulement (12), et deux ou plusieurs ailettes externes (24); et
les corps (10) des unités sont des membres intégrés formés par un procédé de fabrication additive.

14. Échangeur de chaleur selon la revendication 13, dans lequel les corps (10) de la pluralité d'unités (1) comprennent des ailettes internes (14a, 14b, 14c, 14d) présentant des formes ou des motifs d'agencement différents mutuellement dans les parties de voie d'écoulement (12).

15. Échangeur de chaleur selon l'une quelconque des revendications 11 à 13, dans lequel au moins une de la pluralité d'unités (1) comprend un ou plusieurs orifices (31) permettant de faire office d'entrée de fluide (22) ou de sortie de fluide (23).

16. Échangeur de chaleur selon l'une quelconque des revendications 11 à 13, dans lequel au moins une de la pluralité d'unités (1) comprend une pluralité de parties de voie d'écoulement (12) et une dérivation (41) pour raccorder une de la pluralité de parties de voie d'écoulement (12) à une autre de la pluralité de parties de voie d'écoulement (12) via une vanne (42).

17. Échangeur de chaleur selon l'une quelconque des revendications 11 à 13, dans lequel au moins une de la pluralité d'unités (1) comprend une partie de retour (32, 61a, 61b) pour inverser la partie de voie d'écoulement (12) dans une direction opposée.

18. Échangeur de chaleur selon l'une quelconque des revendications 11 à 13, dans lequel la pluralité d'unités (1) comprennent:
une unité à raccordement unique comprenant le connecteur (11) sur une seule surface d'extrémité; et
une unité à raccordements multiples comprenant le connecteur (11) sur chacune de deux ou plusieurs surfaces d'extrémité.

19. Échangeur de chaleur selon l'une quelconque des revendications 11 à 13, dans lequel
le connecteur (11) est une saillie de raccordement (11a) ou un évidement de raccordement (11b), emboîtable l'un dans l'autre, et amovible l'un de l'autre; et
un jeu (CL1) est ménagé entre une surface d'extrémité en pointe (P1) de la saillie de raccordement (11a) et une surface d'appui (P2) de l'évidement de raccordement (11b).

20. Échangeur de chaleur selon la revendication 19, dans lequel chacune de la pluralité d'unités (1) comprend en outre une partie de fixation (16) pour fixer chacune de la pluralité d'unités (1) à une structure de montage.
